(19) Europäisches Patentamt
European Patent Office
Office européen des brevets

(11) Veröffentlichungsnummer: **0 507 801 B1**

(12) # EUROPÄISCHE PATENTSCHRIFT

(45) Veröffentlichungstag der Patentschrift: **10.08.94**

(51) Int. Cl.[5]: **C09B 62/507**, C09B 62/08, D06P 1/384

(21) Anmeldenummer: **91901280.7**

(22) Anmeldetag: **17.12.90**

(86) Internationale Anmeldenummer: **PCT/EP90/02201**

(87) Internationale Veröffentlichungsnummer: **WO 91/09914 (11.07.91 91/15)**

(54) **AZOVERBINDUNG, VERFAHREN ZU DEREN HERSTELLUNG UND IHRE VERWENDUNG ALS FARBSTOFFE.**

(30) Priorität: **29.12.89 DE 3943287**

(43) Veröffentlichungstag der Anmeldung: **14.10.92 Patentblatt 92/42**

(45) Bekanntmachung des Hinweises auf die Patenterteilung: **10.08.94 Patentblatt 94/32**

(84) Benannte Vertragsstaaten: **BE CH DE ES FR GB IT LI**

(56) Entgegenhaltungen:
**EP-A- 0 239 847**
**EP-A- 0 261 079**
**EP-A- 0 264 136**
**EP-A- 0 266 735**
**EP-A- 0 324 373**

(73) Patentinhaber: **HOECHST AKTIENGESELLSCHAFT**

**D-65926 Frankfurt(DE)**

(72) Erfinder: **SPRINGER, Hartmut**
**Am Erdbeerstein 27**
**D-6240 Königstein(DE)**
Erfinder: **HUSSONG, Kurt**
**Am Flachsland 56**
**D-6233 Kelkheim(DE)**

**EP 0 507 801 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Azofarbstoffe.

Faserreaktive Azofarbstoffe mit 2-Amino-naphthalindisulfonsäuren als Diazokomponente sind zahlreich bekannt, beispielsweise aus den Japanischen Patentanmeldungs-Veröffentlichungen Sho-59-133 216, Sho-60-23 453 und Sho-62-220 538 und aus den Europäischen Patentanmeldungs-Veröffentlichungen Nrs. 0 128 034 und 0 239 847. Die steigenden Anforderungen an die Qualität, die Wirtschaftlichkeit und die Brillanz der Färbungen haben es erforderlich gemacht, neue Azofarbstoffe zu entwickeln, die diesbezüglich verbesserte Eigenschaften besitzen und zudem anwendungstechnisch einfach zu handhaben sind.

Mit der vorliegenden Erfindung wurden nunmehr neue Azoverbindungen gefunden, die der allgemeinen Formel (1)

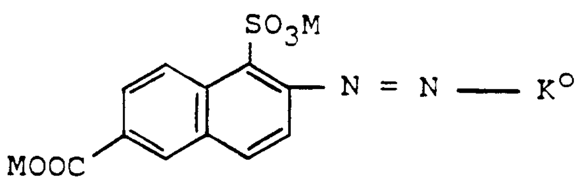

(1)

entsprechen. In dieser Formel bedeuten:

M ist ein Wasserstoffatom oder salzbildendes Metallatom, wie insbesondere ein Alkalimetallatom, wie Natrium, Kalium oder Lithium;

K° ist ein Rest der allgemeinen Formel (2A) oder (2B)

$$-(E-N=N)_v-K-Z \qquad (2A)$$

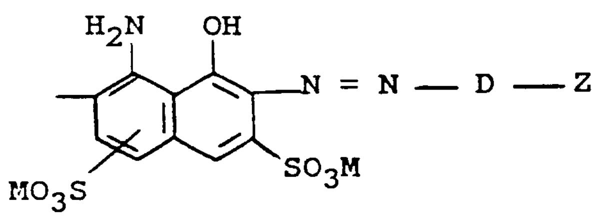

(2B)

in welchen

M die obengenannte Bedeutung besitzt,

K der bivalente, von einer nachstehend definierten Gruppe der Formel -N(R°)- freie Rest einer wasserlöslichen aminogruppenhaltigen Kupplungskomponente ist,

Z einen Rest der allgemeinen Formel (3)

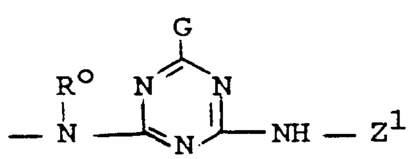

(3)

bedeutet, in welcher

R° Wasserstoff oder Alkyl von 1 bis 4 C-Atomen, wie Methyl oder Ethyl, ist oder Alkyl von 1 bis 4 C-Atomen, wie beispielsweise Ethyl, ist, das durch Sulfo, Carboxy, Sulfato, Phosphato, Hydroxy, Methoxy, Ethoxy, Phenyl, Monosulfophenyl oder Disulfophenyl substituiert ist, und bevorzugt Wasserstoff bedeutet,

G Halogen, wie Fluor oder Chlor, Methoxy oder Hydroxy ist oder einen gegebenenfalls substituierten Anilinorest bedeutet, der eine faserreaktive Gruppe enthalten kann, wie beispielsweise einen Phenylaminorest, der durch eine faserreaktive Gruppe der allgemeinen Formel $-SO_2-Y$ mit Y der

später angegebenen Bedeutung substituiert sein kann und/oder der durch 1 oder 2 Substituenten aus der Gruppe Methyl, Ethyl, Methoxy, Ethoxy, Chlor und Sulfo substituiert sein kann, und

$Z^1$ ein Rest der allgemeinen Formel (3a) oder (3b)

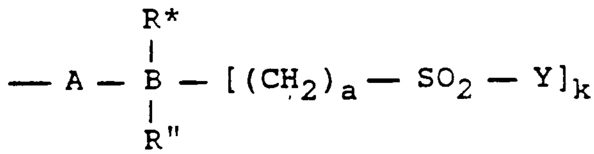

(3a)

$— alk —SO_2 — Y$ (3b)

ist, in welchen

A eine direkte Bindung ist oder ein Alkylen von 2 bis 6 C-Atomen oder ein Phenylen, das durch 1 oder 2 Substituenten aus der Gruppe Methyl, Ethyl, Methoxy, Ethoxy, Chlor, Sulfo und Carboxy substituiert sein kann,

B ein Benzol- oder Naphthalinrest ist,

R* Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Fluor, Brom, Chlor, Sulfo, Carboxy, Carbalkoxy von 2 bis 5 C-Atomen, wie Carbomethoxy und Carbethoxy, Trifluormethyl, Carbamoyl oder N-($C_1$-$C_4$-Alkyl)-carbamoyl, bevorzugt Wasserstoff, Methoxy oder Methyl, ist, falls B einen Benzolring bedeutet, oder

R* Wasserstoff oder Sulfo ist, falls B einen Naphthalinring bedeutet,

R" Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Nitro oder Sulfo, bevorzugt Wasserstoff, Methoxy, Ethoxy, Methyl und Sulfo ist, falls B einen Benzolring bedeutet, oder

R" Wasserstoff oder Sulfo ist, falls B einen Naphthalinrest bedeutet,

Y die Vinylgruppe ist oder eine Ethylgruppe, die in β-Stellung einen unter Bildung der Vinylgruppe alkalisch eliminierbaren Substituenten enthält, ist, wobei Y im Formelrest G die gleiche oder eine andere Bedeutung wie Y in der an B gebundenen Gruppierung besitzen kann,

alk ein Alkylen von 2 bis 6 C-Atomen und bevorzugt die 1,3-Propylen-Gruppe ist,

a die Zahl Null, 1 oder 2, bevorzugt Null, ist und

k die Zahl 1 oder 2, bevorzugt 1, ist,

D einen Rest der allgemeinen Formel (4)

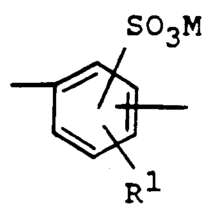

(4)

bedeutet, in welcher

M eine der obengenannten Bedeutungen hat,

$R^1$ Wasserstoff oder Alkyl von 1 bis 4 C-Atomen, wie Ethyl und insbesondere Methyl, ist und die Gruppe $-SO_3M$ bevorzugt in ortho-Stellung zur mit der Azogruppe verbundenen freien Bindung an den Benzolkern gebunden ist,

E ein Rest der allgemeinen Formel (5a), (5b), (5c) oder (5d)

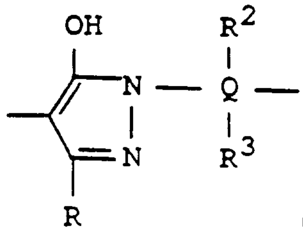 (5a)

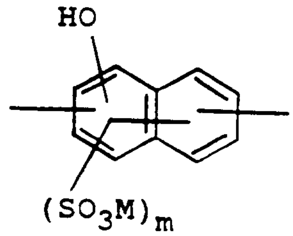 (5b)

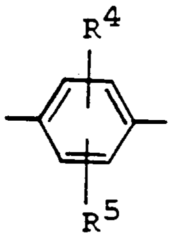 (5c)

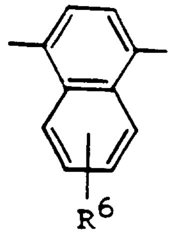 (5d)

ist, in welchen

R — Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl ist, bevorzugt Methyl, Carboxy, Carbomethoxy oder Carbethoxy ist,

Q — ein Benzol- oder Naphthalinrest ist,

$R^2$ — Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Fluor, Brom, Chlor, Sulfo, Carboxy, Carbalkoxy von 2 bis 5 C-Atomen, wie Carbomethoxy und Carbethoxy, Trifluormethyl, Carbamoyl oder N-($C_1$-$C_4$-Alkyl)-carbamoyl, bevorzugt Wasserstoff, Methoxy oder Methyl, ist, falls Q einen Benzolring bedeutet, oder

$R^2$ — Wasserstoff oder Sulfo ist, falls Q einen Naphthalinring bedeutet,

$R^3$ — Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Sulfo, bevorzugt Wasserstoff, Methoxy, Ethoxy oder Methyl, ist, falls Q einen Benzolrest bedeutet, oder Wasserstoff oder Sulfo ist, falls Q einen Naphthalinrest bedeutet,

$R^4$ — Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Brom, Chlor, Trifluormethyl, Sulfo, Carboxy oder Cyano, bevorzugt Wasserstoff, Methyl oder Sulfo, ist,

$R^5$ — Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Amino, Alkylamino von 1 bis 4 C-Atomen, wie Ethylamino, Alkanoylamino von 2 bis 5 C-Atomen, wie Acetylamino und Propionylamino, Benzoylamino, Ureido, N'-Phenylureido, N'-($C_1$-$C_4$-Alkyl)-ureido, Phenylsulfonyl oder Alkylsulfonyl von 1 bis 4 C-Atomen, wie Ethylsulfonyl und Methylsulfonyl, und bevorzugt Ureido, Acetylamino oder Propionylamino ist,

| | |
|---|---|
| $R^6$ | Wasserstoff oder Sulfo ist, |
| M | eine der obengenannten Bedeutungen hat, |
| m | die Zahl 1 oder 2 bedeutet, |
| v | die Zahl Null oder 1 ist und |
| -K-N($R^o$)- | der bivalente Rest einer wasserlöslichen, aminogruppenhaltigen Kupplungskomponente ist, wie beispielsweise ein Rest der allgemeinen Formel (6a), (6b), (6c), (6d), (6e), (6f), (6g), (6h) oder (6i) |

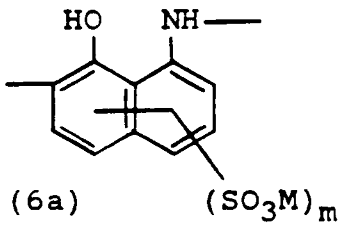

(6a)

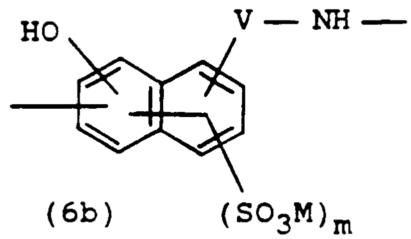

(6b)

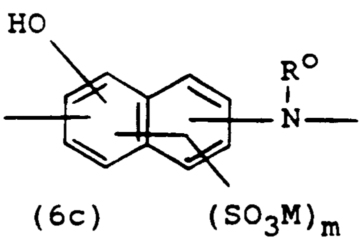

(6c)

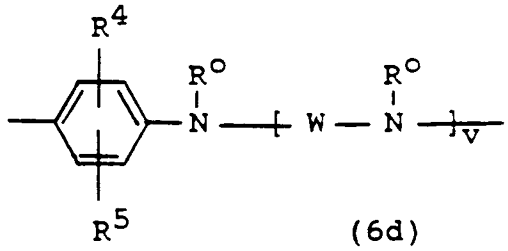

(6d)

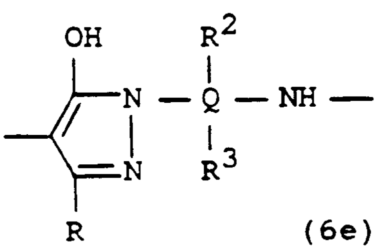

(6e)

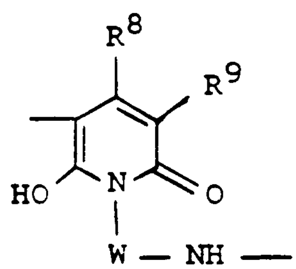

(6f)

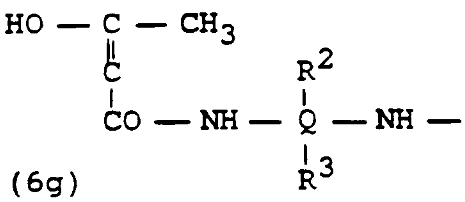

(6g)

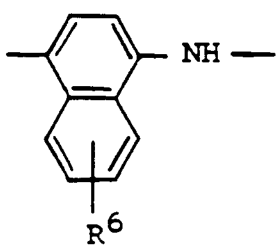

(6h)

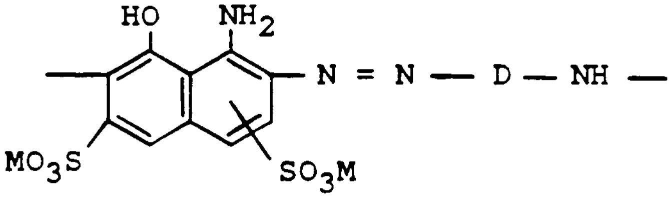

(6i)

in welchen

| | |
|---|---|
| M, m, v, Q, D, R, $R^o$, $R^1$, $R^2$, $R^3$, $R^4$, $R^5$ und $R^6$ | eine der obengenannten Bedeutungen besitzen, |
| V | eine direkte, kovalente Bindung oder ein Rest der Formel -NH-CO-phenylen- , -NH-CO-NH-phenylen- , $-N(CH_3)$-CO-phenylen- , $-N(CH_3)$-CO-NH-phenylen- oder -NH-phenylen- ist, |
| W | ein Phenylenrest ist, der durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Carboxy und Sulfo substituiert sein kann, oder ein Alkylen von 1 bis 6 C-Atomen, bevorzugt von 1 bis 4 C-Atomen, wie beispielsweise Ethylen, ist oder ein Alkylen-phenylen mit einem Alkylen von 2 bis 4 C-Atomen ist, wie beispielsweise der Methylen-phenylen- oder Ethylenphenylen-Rest ist, |
| $R^8$ | Wasserstoff, Alkyl von 1 bis 4 C-Atomen, wie Methyl, Alkoxy von 1 bis 4 C-Atomen, wie Methoxy, Phenyl oder durch Cyano substituiertes Alkyl von 1 bis 4 C-Atomen ist und |
| $R^9$ | Wasserstoff, Sulfo, Sulfoalkyl von 1 bis 4 C-Atomen, wie Sulfomethyl, Cyano oder Carbamoyl ist. |

Der Formelrest E ist als der Rest einer kupplungsfähigen und diazotierbaren Verbindung entsprechend der allgemeinen Formel $H-E-NH_2$ aufzufassen.

Alkalisch eliminierbare Substituenten der Ethylgruppe des Restes Y sind beispielsweise Halogenatome, wie das Bromatom und Chloratom, Estergruppen organischer Carbon- und Sulfonsäuren, wie ein Alkanoyloxyrest von 2 bis 5 C-Atomen, beispielsweise die Acetyloxygruppe, oder ein Sulfobenzoyloxy-, Benzoyloxy-, Phenylsulfonyloxy- oder Toluylsulfonyloxy-Rest, desweiteren beispielsweise die sauren Estergruppen der Phosphorsäure, der Schwefelsäure und der Thioschwefelsäure (Phosphato- bzw. Sulfato- bzw. Thiosulfatogruppen), ebenso Dialkylaminogruppen mit Alkylgruppen von jeweils 1 bis 4 C-Atomen, wie die Dimethylamino- und Diethylaminogruppe.

Bevorzugt ist Y die Vinylgruppe und insbesondere die $\beta$-Sulfatoethyl-Gruppe.

Die vorstehend oder nachfolgend bezeichneten Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Thiosulfatogruppen Gruppen entsprechend der allgemeinen Formel $-S-SO_3M$ , Phosphatogruppen Gruppen entsprechend der allgemeinen Formel $-OPO_3M_2$ und Sulfatogruppen entsprechend Gruppen der allgemeinen Formel $-OSO_3M$ , jeweils mit M der obengenannten Bedeutung.

In den Formeln (5b), (6b) und (6c) stehen jeweils die Hydroxygruppe und die freie Bindung im selben aromatischen Kern in ortho-Stellung zueinander. Bevorzugt steht die Hydroxygruppe in $\alpha$-Stellung an den Naphthalinrest gebunden.

Bevorzugt ist B ein Phenylenrest, wobei a bevorzugt für die Zahl Null und k die Zahl 1 bedeutet, wobei die Gruppe $-SO_2-Y$ bevorzugt in meta- oder para-Stellung zur Gruppe -NH-A- an den Phenylenrest gebunden ist. Bevorzugt ist weiterhin R* ein Wasserstoffatom oder die Methoxygruppe oder die Sulfogruppe, und bevorzugt ist weiterhin R'' ein Wasserstoffatom, die Methylgruppe oder die Methoxygruppe.

Bevorzugt sind weiterhin Verbindungen der allgemeinen Formel (1), in welchen G ein Chlor- oder Fluoratom ist. Weiterhin bevorzugt sind Verbindungen der Formel (1) in welcher A eine direkte Bindung bedeutet.

Faserreaktive Gruppierungen Z entsprechend den allgemeinen Formel (3) sind beispielsweise der 4-Chlor-6-[$\beta$-(4'-$\beta$'-sulfatoethylsulfonyl-phenyl)-ethyl]-amino-1,3,5-triazin-2-yl-amino, 4-Chlor-6-(4'-$\beta$-sulfatoethylsulfonyl-phenyl)-amino-1,3,5-triazin-2-yl-amino-, 4-Fluor-6-(3'-$\beta$-sulfatoethylsulfonyl-phenyl)-amino-1,3,5-triazin-2-yl-amino-, 4-Fluor-6-(4'-$\beta$-sulfatoethylsulfonyl-phenyl)-amino-1,3,5-triazin-2-yl-amino-, 4-Chlor-6-(3'-$\beta$-sulfatoethylsulfonyl-phenyl)-amino-1,3,5-triazin-2-yl-amino-, 4-Chlor-6-[2'-sulfo-5'-($\beta$-sulfatoethyl-sulfonyl)-phenyl]-amino-1,3,5-triazin-2-yl-amino- und der 4-Fluor-6-[$\beta$-(4'-$\beta$'-sulfatoethylsulfonyl-phenyl)-ethyl]-amino-1,3,5-triazin-2-yl-amino-Rest sowie andere, aus den Beispielen ersichtliche Reste.

Bevorzugte Azoverbindungen der allgemeinen Formel (1) mit dem Rest $K^o$ gleich der allgemeinen Formel (2A) sind insbesondere solche, in denen der Rest $K^o$ einen Rest der allgemeinen Formel (7a), (7b),

(7c), (7d), (7e) oder (7f)

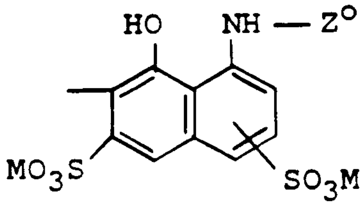
(7a)

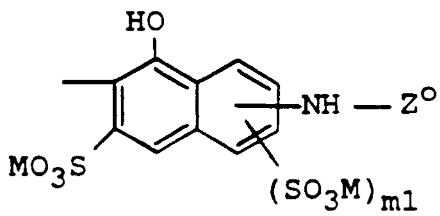
(7b)

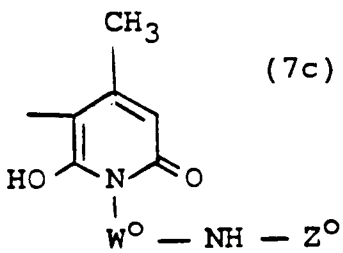
(7c)

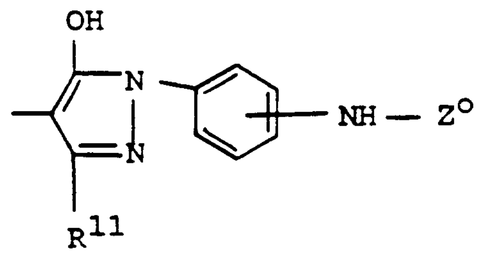
(7d)

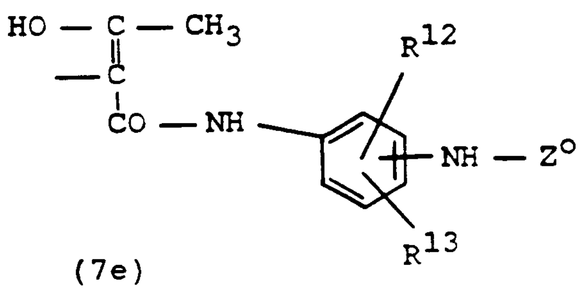
(7e)

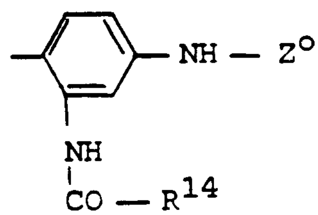
(7f)

hiervon bevorzugt der allgemeinen Formel (7a) oder (7b), bedeutet, in welchen

M die obengenannte Bedeutung hat,

Z° ein Rest der allgemeinen Formel (3A)

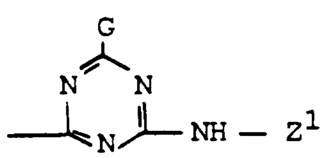
(3A)

mit G und $Z^1$ der obigen, insbesondere bevorzugten, Bedeutungen ist,

$m_1$ die Zahl Null oder 1 ist (wobei im Falle $m_1$ = Null diese Gruppe Wasserstoff bedeutet),

W° Alkylen von 2 bis 4 C-Atomen oder Phenylen ist,

$R^{11}$ Carboxy, Methyl oder Carbethoxy ist,

$R^{12}$ Wasserstoff, Methyl, Methoxy, Sulfo oder Chlor ist,

$R^{13}$ Wasserstoff, Methyl oder Methoxy ist und

$R^{14}$ Methyl oder Amino ist,

und insbesondere bevorzugt sind weiterhin Verbindungen entsprechend den Formeln (1A), (1B), (1C), (1D) und (1E)

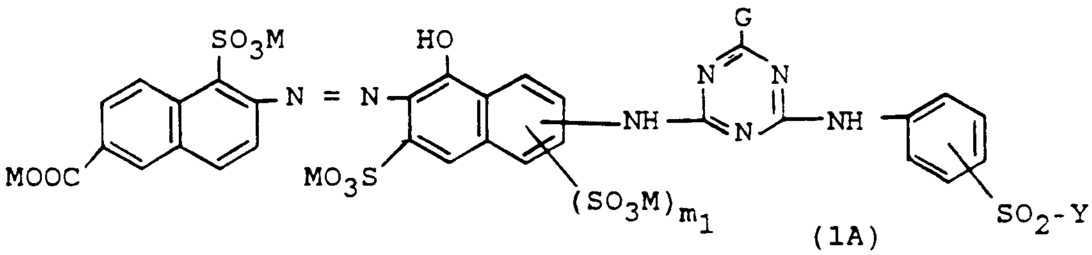

(1A)

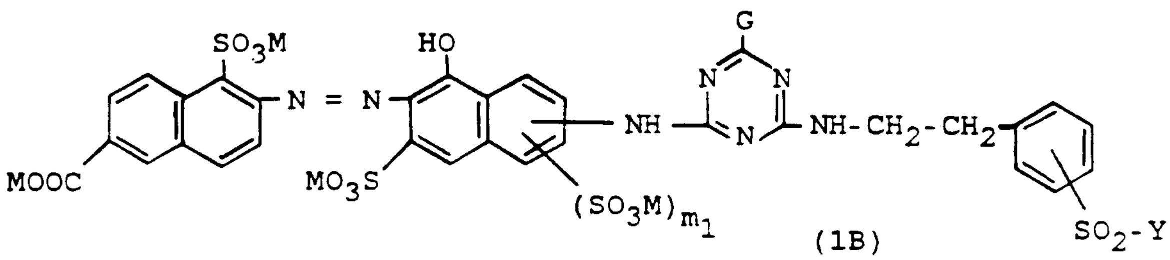

(1B)

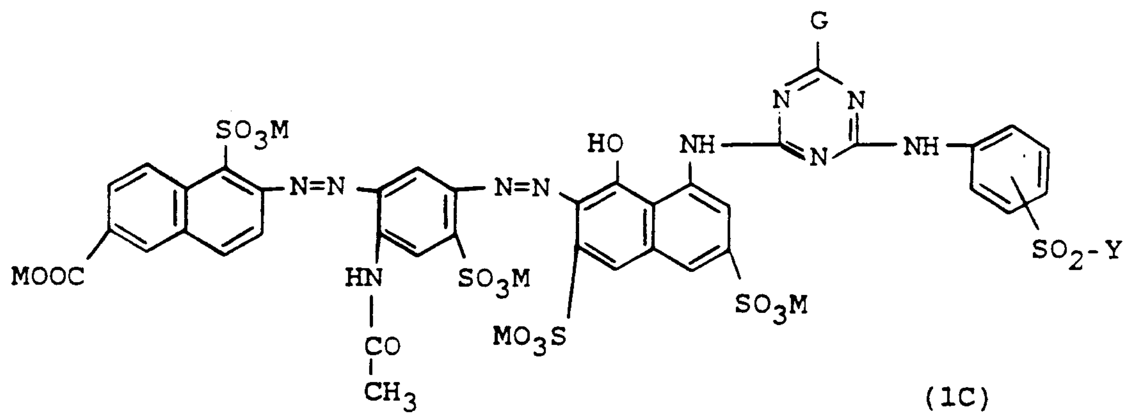

(1C)

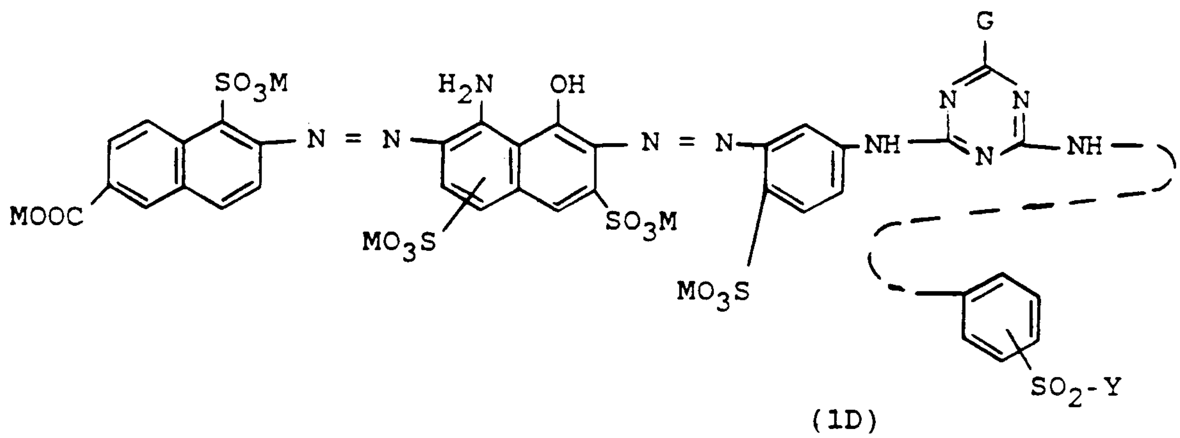

(1D)

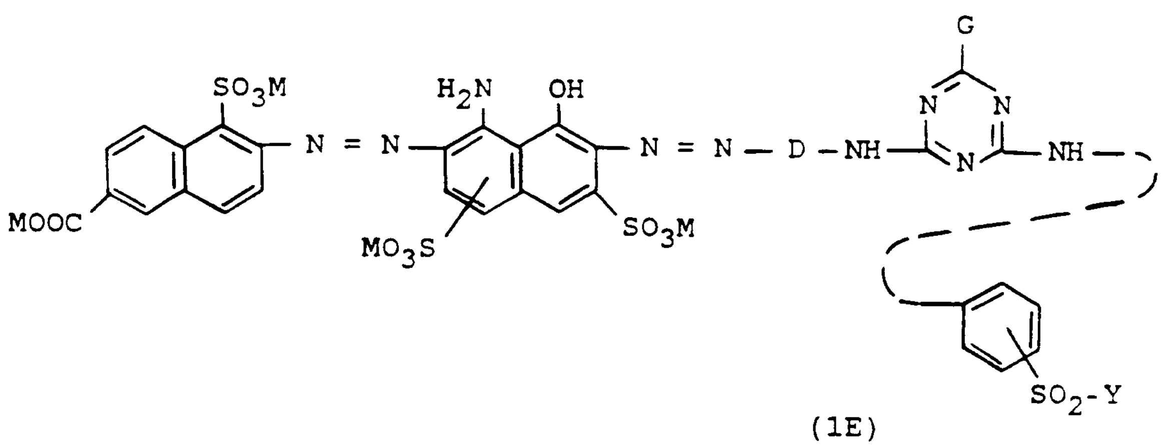

(1E)

in welchen D, Y und M eine der obengenannten, insbesondere bevorzugten Bedeutungen haben, $m_1$ gleich Null oder 1 ist und G Chlor oder Fluor ist.

Reste K° der allgemeinen Formel (2A) sind beispielsweise 1-[4'-Chlor-6'-(4''-$\beta$-sulfatoethylsulfonyl-phenyl)-amino-s-triazin-2'-yl]-amino-8-hydroxy-3,6- oder -4,6-disulfo-naphth-7-yl, 2-[4'-Chlor-6'-(4''-$\beta$-sulfatoethylsulfonyl-phenyl)-amino-s-triazin-2'-yl]-amino-8-hydroxy-6-sulfo-naphth-7-yl, 3-[4'-Chlor-6'-(4''-$\beta$-sulfatoethylsulfonyl-phenyl)-amino-s-triazin-2'-yl]-amino-8-hydroxy-6-sulfo-naphth-7-yl, 1-[4'-Fluor-6'-(4''-$\beta$-sulfatoethylsulfonyl-phenyl)-amino-s-triazin-2'-yl]-amino-8-hydroxy-3,6- oder -4,6-disulfo-naphth-7-yl, 2-[4'-Fluor-6'-(4''-$\beta$-sulfatoethylsulfonyl-phenyl)-amino-s-triazin-2'-yl]-amino-8-hydroxy-6-sulfo-naphth-7-yl, 3-[4'-Fluor-6'-(4''-$\beta$-sulfatoethylsulfonyl-phenyl)-amino-s-triazin-2'-yl]-amino-8-hydroxy-6-sulfo-naphth-7-yl, 1-{4'-Chlor-6'-[β-(4''-β''-sulfatoethylsulfonyl-phenyl)-ethylamino]-s-triazin-2'-yl}-amino-8-hydroxy-3,6- oder -4,6-disulfo-naphth-7-yl, 1-[4'-Chlor-6'-(3''-β-sulfatoethylsulfonyl-phenyl)-amino-s-triazin-2'-yl]-amino-8-hydroxy-3,6- oder -4,6-disulfo-naphth-7-yl, 1-[4'-Chlor-6'-(2''-sulfo-4''-β-sulfatoethylsulfonyl-phenyl)-amino-s-triazin-2'-yl]-amino-8-hydroxy-3,6-disulfo-naphth-7-yl, 1-{4'-Chlor-6'-[β-(2''-sulfo-4''-β''-sulfatoethylsulfonyl-phenyl)-ethyl]-amino-s-triazin-2'-yl}-amino-8-hydroxy-3,6-disulfo-naphth-7-yl, 1-{4'-Fluor-6'-[β-(3''-β''-sulfatoethylsulfonyl-phenyl)-ethyl]-amino-s-triazin-2'-yl}-amino-8-hydroxy-3,6-disulfo-naphth-7-yl,1-{4'-Chlor-6'-[γ-(β'-sulfatoethylsulfonyl)-propyl]-amino-s-triazin-2'-yl}-amino-8-hydroxy-3,6-disulfo-naphth-7-yl, 1-[4'-Chlor-6'-(2''-sulfo-5''-β-sulfatoethylsulfonyl-phenyl)-amino-s-triazin-2'-yl]-amino-8-hydroxy-3,6-disulfo-naphth-7-yl, 1-[4'-Methoxy-6'-(4''-β-sulfatoethylsulfonyl-phenyl)-amino-s-triazin-2'-yl]-amino-8-hydroxy-3,6-disulfo-naphth-7-yl, 1-[4'-Chlor-6'-(4''-vinylsulfonyl-phenyl)-amino-s-triazin-2'-yl]-amino-8-hydroxy-3,6-disulfo-naphth-7-yl, 1-[4'-Chlor-6'-(4''-β-sulfatoethylsulfonyl-phenyl)-amino-s-triazin-2'-yl]-amino-4-sulfo-8-hydroxy-naphth-7-yl, 1-[4'-Chlor-6'-(3''-β-sulfatoethylsulfonyl-phenyl)-amino-s-triazin-2'-yl]-amino-4-sulfo-8-hydroxy-naphth-7-yl, 1-{4'-Chlor-6'-[β-(4''-β''-sulfatoethylsulfonyl-phenyl)-ethyl]-amino-s-triazin-2'-yl}-amino-3-acetylamino-phenyl, 1-[4'-Chlor-6'-(4''-β-sulfatoethylsulfonyl-phenyl)-amino-s-triazin-2'-yl]-amino-3-acetylamino-phenyl, 1-[4'-Chlor-6'-(4''-β-sulfatoethylsulfonyl-phenyl)-amino-s-triazin-2'-yl]-amino-3-propionylamino-phenyl, 1-[4'-Chlor-6'-(4''-β-sulfatoethylsulfonyl-phenyl)-amino-s-triazin-2'-yl]-amino-3-ureido-phenyl, 1-[4'-Fluor-6'-(3''-β-sulfatoethylsulfonyl-phenyl)-amino-s-triazin-2'-yl]-amino-3-ureido-phenyl, 1-[4'-Fluor-6'-(4''-β-sulfatoethylsulfonyl-phenyl)-amino-s-triazin-2'-yl]-amino-3-ureido-phenyl, 1-[4'-Chlor-6'-(3''-β-sulfatoethylsulfonyl-phenyl)-amino-s-triazin-2'-yl]-amino-3-ureido-phenyl, 1-[4'-Chlor-6'-(2''-sulfo-5''-β-sulfatoethylsulfonyl-phenyl)-amino-s-triazin-2'-yl]-amino-3-(N'-phenyl-ureido)-phenyl, 1-{4'-Fluor-6'-[γ-(β'-sulfatoethylsulfonyl)-propyl]-amino-s-triazin-2'-yl}-amino-3-(N'-methyl-ureido)-phenyl, 1-[4'-Fluor-6'-(4''-β-sulfatoethylsulfonyl-phenyl)-amino-s-triazin-2'-yl]-amino-3-acetylamino-phenyl, 1-[4'-Fluor-6'-(4''-β-sulfatoethylsulfonyl-phenyl)-amino-s-triazin-2'-yl]-amino-3-methyl-phenyl, 1-[4'-Fluor-6'-(2''-sulfo-4''-β-sulfatoethylsulfonyl-phenyl)-amino-s-triazin-2'-yl]-amino-3-acetylamino-phenyl und 1-[4'-Fluor-6'-(4''-β-sulfatoethylsulfonyl-phenyl)-amino-s-triazin-2'-yl]-amino-3-ureido-phenyl.

Die vorliegende Erfindung betrifft weiterhin Verfahren zur Herstellung der erfindungsgemäßen Azoverbindungen der allgemeinen Formel (1), die dadurch gekennzeichnet sind, daß man im Falle, daß $K^o$ einen Rest der allgemeinen Formel (2A) bedeutet, die Diazoniumverbindung eines Amins der allgemeinen Formel (8)

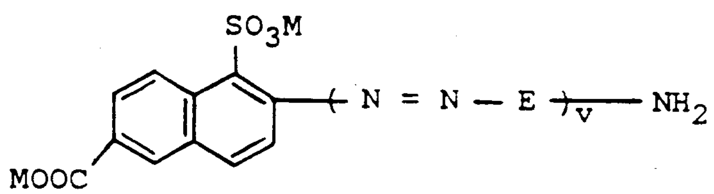

(8)

in welcher M, E und v die obengenannten Bedeutungen haben, mit einer Verbindung der allgemeinen Formel H-K-N($R^o$)-Z mit K, $R^o$ und Z der obengenannten Bedeutung kuppelt, oder daß man eine Verbindung der allgemeinen Formel (9)

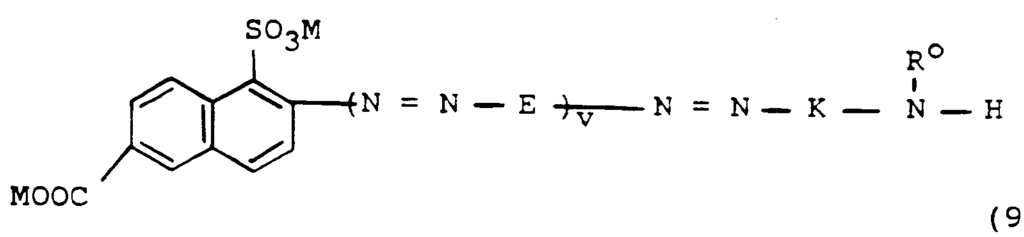

(9)

in welcher M, E, v, $R^o$ und K die obengenannten Bedeutungen haben, mit einer Verbindung der allgemeinen Formel Hal-Z , in welcher Z die obengenannte Bedeutung besitzt und Hal ein Halogenatom, wie Chlor- oder Fluoratom ist, umsetzt, oder daß man eine Verbindung der allgemeinen Formel (10)

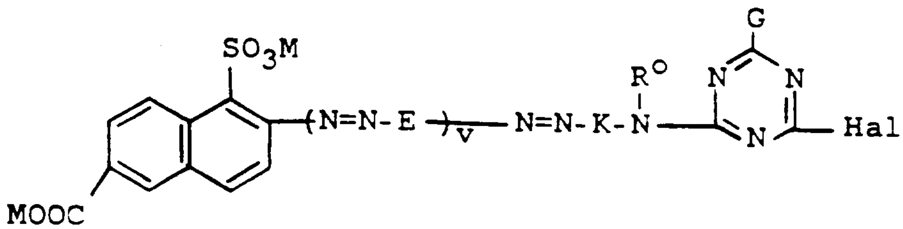

(10)

in welcher Hal, M, E, v, R°, K und G eine der obengenannten Bedeutungen besitzen, mit einer Verbindung der allgemeinen Formel (11a) oder (11b)

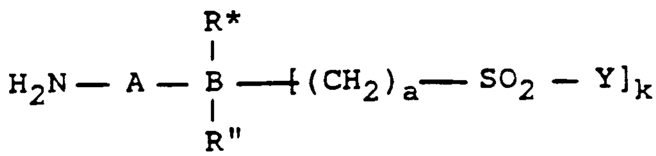

(11a)

$H_2N$ — alk — $SO_2$ — Y (11b)

mit A, B, R*, R'', a, k, Y and alk der obengenannten Bedeutung kondensiert, und daß man im Falle von K° gleich einem Rest der allgemeinen Formel (2B) eine Verbindung der allgemeinen Formel (12)

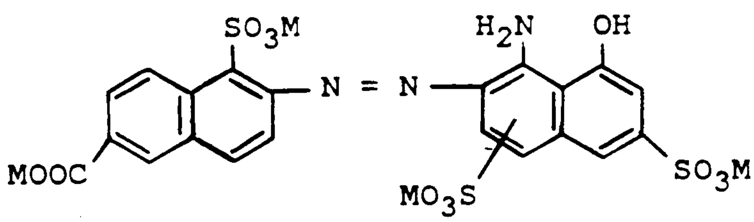

(12)

in welcher M die obengenannte Bedeutung besitzt, mit der Diazoniumverbindung eines Amins der allgemeinen Formel (13)

$H_2N$ — D — N(R°)— Z (13)

in welcher D, R° und Z die obengenannte Bedeutung hat, kuppelt, oder daß man eine Verbindung der allgemeinen Formel (14)

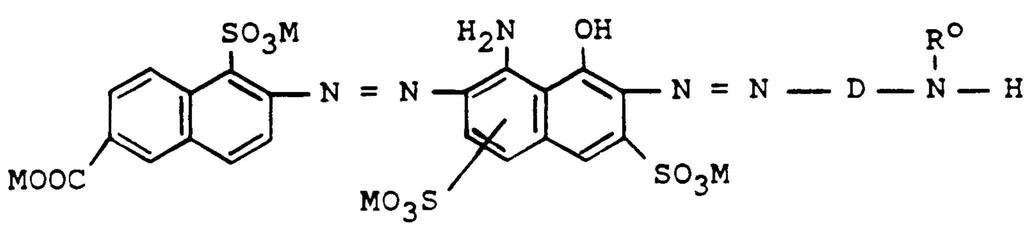

(14)

in welcher D, R° und M die obengenannten Bedeutungen haben, mit einer Verbindung der allgemeinen Formel Hal-Z mit Hal und Z der obengenannten Bedeutung umsetzt, oder daß man eine Verbindung der allgemeinen Formel (15)

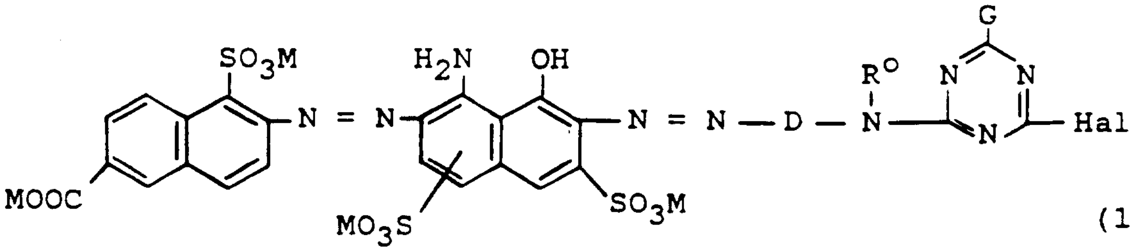

(15)

in welcher G, D, R° und M die obengenannten Bedeutungen haben, mit einer Verbindung der allgemeinen Formel (11a) oder (11b) kondensiert.

Die Diazotierungs- und Kupplungsreaktionen des erfindungsgemäßen Verfahrens erfolgen in üblicher und altbekannter Weise, so die Diazotierung in der Regel bei einer Temperatur zwischen -5 °C und +15 °C und einem pH-Wert unterhalb von 2 mittels einer starken Säure und Alkalinitrit in bevorzugt wäßrigem Medium und die Kupplungsreaktion in der Regel bei einer Temperatur zwischen 0 und 30 °C und bei einem pH-Wert zwischen 1 und 4,5 im Falle einer aminogruppenhaltigen Kupplungskomponente und bei einem pH-Wert zwischen 3 und 7,5 im Falle einer hydroxygruppenhaltigen Kupplungskomponente, bevorzugt in wäßrigem Medium.

Die Ausgangsverbindungen der allgemeinen Formel (8) mit v gleich 1 werden aus dem 1-Sulfo-6-carboxy-2-amino-naphthalin als Diazokomponente und der Verbindung der allgemeinen Formel $H\text{-}E\text{-}NH_2$ als Kupplungskomponente in bekannter Weise der Diazotierungs- und Kupplungsreaktionen hergestellt. In gleicher Weise erfolgt die Synthese der Azoverbindungen der allgemeinen Formel (12) durch Kupplung des Diazoniumsalzes des 1-Sulfo-6-carboxy-2-aminonaphthalins mit der 1-Amino-8-naphthol-3,6- oder -4,6-disulfonsäure analog bekannter Verfahrensweisen im stark sauren Medium.

Die Ausgangsverbindungen entsprechend der allgemeinen Formel $H\text{-}E\text{-}NH_2$ und der allgemeinen Formeln (11a) und (11b) sind bekannt und zahlreich in der Literatur beschrieben.

Ausgangsverbindungen der allgemeinen Formel $H\text{-}E\text{-}NH_2$ sind beispielsweise Anilin, 3-Methyl-anilin, 3-Chlor-anilin, 2,5-Dimethyl-anilin, 2,5-Dimethoxy-anilin, 3-Methoxy-anilin, 3-Methyl-6-methoxy-anilin, 3-Ureido-anilin, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 3-Acetylamino-anilin, 2-Methyl-anilin, 2-Methoxy-anilin, 3-Benzoylamino-anilin, 2,3-Dimethyl-anilin, 3,5-Dimethyl-anilin, 2-Methoxy-5-acetylamino-anilin, 2-Chlor-6-methyl-anilin, 5-Chlor-2-methyl-anilin, 2,6-Dichlor-3-methyl-anilin und 2-Methoxy-5-methyl-anilin.

Ausgangsverbindungen der allgemeinen Formel H-K-N(R°)-H sind beispielsweise 1-(3'- oder 4'-Aminophenyl)-3-carboxy-5-pyrazolon, 1-(2'-Sulfo-5'-aminophenyl)-3-carboxy-5-pyrazolon, 1-(2'-Methoxy-5'-aminophenyl)-3-carboxy-5-pyrazolon, 1-(3'- oder 4'-Aminophenyl)-3-methyl-5-pyrazolon, 1-(6'-Amino-4',8'-disulfonaphth-2'-yl)-3-carboxy-5-pyrazolon, 1-Amino-3,6- oder -4,6-disulfo-8-naphthol, 7-Amino-3-sulfo-1-naphthol, 6-Amino-3-sulfo-1-naphthol, 6-Amino-3,5-disulfo-1-naphthol, 3-Methyl-anilin, 3-Chlor-anilin, 2,5-Dimethyl-anilin, 2,5-Dimethoxy-anilin, Anilin, 3-Methoxy-anilin, 3-Methyl-6-methoxy-anilin, 3-Ureido-anilin, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 3-Acetylamino-anilin, 2-Methyl-anilin, 2-Methoxy-anilin, 3-Benzoylamino-anilin, 2,3-Dimethyl-anilin, 3,5-Dimethyl-anilin, 2-Methoxy-5-acetylamino-anilin, 2-Chlor-6-methyl-anilin, 5-Chlor-2-methyl-anilin, 2,6-Dichlor-3-methyl-anilin, 2-Methoxy-5-methyl-anilin, 4-(Phenylazo)-anilin, 3-Propionylamino-anilin, 3-Butyrylamino-anilin, 2-Sulfo-5-acetylamino-anilin, 2-Amino-5-naphthol-7-sulfonsäure, 2-Amino-8-naphthol-6-sulfonsäure, 6-Methylamino-3-sulfo-1-naphthol, 1-Amino-3,6- oder -4,6-disulfo-8-naphthol, 6-Amino-3,5-disulfo-1-naphthol, 6-(4'-Aminophenyl)-amino-3-sulfo-1-naphthol, 1-Amino-2,4-disulfo-8-naphthol, 1-(4'-Amino-benzoylamino)-3,6-disulfo-8-naphthol, 1-(3'-Amino-benzoylamino)-3,6-disulfo-8-naphthol, 1-(4'-Amino-2'-sulfo-phenyl)-3-carboxy-5-pyrazolon, 1-(4'-Amino-2'-sulfo-phenyl)-3-methyl-5-pyrazolon, 1-(3'-Sulfo-6'-methyl-5'-amino-phenyl)-3-carboxy-5-pyrazolon, 1-{4'-[N'-(4''-sulfo-3''-amino-phenyl)-carbamoyl]-phenyl}-3-methyl- oder -3-carboxy-5-pyrazolon, N-(3,5-Disulfo-4-amino)-acetoacetylanilid, N-(3-Sulfo-4-amino-6-methoxy)-acetoacetylanilid, 2-Hydroxy-5-carbamoyl-4-methyl-1-(β-aminoethyl)-6-pyridon und 2-Hydroxy-5-sulfomethyl-4-methyl-1-(β-aminoethyl)-6-pyridon.

Ausgangsverbindungen der allgemeinen Formeln (11a) und (11b) sind beispielsweise 2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(β-Sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder

3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonylanilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 2-Methoxy-4-[β-(N-methyltauryl)-ethylsulfonyl]-anilin, 5-(β-Sulfatoethylsulfonyl)-2-amino-naphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin sowie γ-(β'-Sulfatoethylsulfonyl)-propylamin und γ-(β'-Chlorethylsulfonyl)-propylamin.

Die Kondensationsreaktion einer Amino-Ausgangsverbindung der allgemeinen Formel (9) oder (14) mit einer Verbindung der allgemeinen Formel Hal-Z erfolgt in üblicher Weise der Umsetzung einer Aminoverbindung mit einer ein reaktives Halogenatom enthaltenden Triazinverbindung, so in organischem oder bevorzugt wäßrig-organischem Medium, insbesondere bevorzugt in wäßrigem Medium, unter Zusatz eines säurebindenden Mittels, wie eines Alkali- oder Erdalkalicarbonats, Alkali- oder Erdalkalihydrogencarbonats oder -hydroxids oder Alkaliacetats, wobei die Alkali- und Erdalkalimetalle vorzugsweise Natrium, Kalium oder Calcium sind, oder eines tertiären Amins, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan oder Dimethylformamid.

Die Kondensationsreaktionen zwischen diesen Aminoverbindungen und der Verbindung Hal-Z erfolgen in der Regel bei einer Temperatur zwischen -10 °C und +60 °C, vorzugsweise zwischen 30 und 45 °C, sowie bei einem pH-Wert zwischen 2 und 7, bevorzugt zwischen 2 und 4. Die Umsetzung mit einer Verbindung Hal-Z mit Hal einem Fluoratom erfolgt insbesondere bevorzugt bei einem pH-Wert zwischen 3 und 5 und bei einer Temperatur zwischen 0 °C und 30 °C. Die Umsetzung mit Hal-Z, worin Hal für ein Chloratom steht, so insbesondere die Umsetzung mit einer Verbindung der allgemeinen Formel (16)

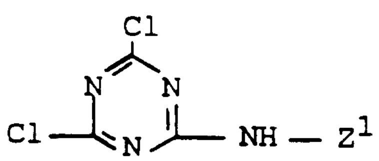

(16)

mit $Z^1$ der obengenannten Bedeutung, erfolgt insbesondere bevorzugt bei einem pH-Wert zwischen 2,0 und 4,5 und einer Temperatur zwischen 30 und 45 °C.

Die Kondensationsreaktion einer Halogen-triazinylamino-Verbindung der allgemeinen Formel (10) oder (15) mit einer Aminoverbindung entsprechend den allgemeinen Formeln (11) erfolgt ebenso analog bekannten Verfahrensweisen solcher Halogen-triazinylamino-Verbindungen mit Aminen, so auch in den oben angegebenen Reaktionsmedien unter Einsatz eines säurebindenden Mittels. In der Regel erfolgt die Umsetzung bei einer Temperatur zwischen 40 und 100 °C, vorzugsweise zwischen 50 und 70 °C, wobei die Umsetzung mit Ausgangsverbindungen, in welchen Hal ein Chloratom bedeutet, insbesondere bevorzugt bei einer Temperatur zwischen 50 und 70 °C und einem pH-Wert zwischen 2 und 4 durchgeführt wird.

Das als Ausgangsverbindung dienende 1-Sulfo-6-carboxy-2-amino-naphthalin ist bisher noch nicht bekannt. Es läßt sich erfindungsgemäß herstellen, indem man 2-Naphthol-6-carbonsäure in einem Schwefelsäure/Schwefeltrioxid-Gemisch (Oleum) mit einem Schwefeltrioxid-Gehalt von 0 bis 65 Gew.-% bei einer Temperatur zwischen 0 °C und 40 °C, vorzugsweise bei 0 bis 10 °C, zunächst zum 1-Sulfo-6-carboxy-2-naphthol sulfiert, diese Verbindung isoliert und anschließend bei einer Temperatur zwischen 100 und 160 °C im Autoklaven in einem wäßrigen Medium mit Ammoniumhydrogensulfit umsetzt.

Das 1-Sulfo-6-carboxy-2-naphthol isoliert man aus dem Reaktionsgemisch in üblicher Weise, indem man den Reaktionsansatz vorsichtig auf Eis gießt. Das ausgefallene Produkt wird abgesaugt, in Eiswasser suspendiert und noch vorhandene Schwefelsäure mittels Natriumcarbonat durch Einstellen der Suspension auf einen pH-Wert zwischen 4 und 4,5 neutralisiert. Die Verbindung kann sodann durch Absaugen und Trocknen isoliert werden.

Der Austausch der Hydroxygruppe durch die Aminogruppe erfolgt in Analogie zur Bucherer-Reaktion. Hierzu geht man in der Regel so vor, daß man das 1-Sulfo-6-carboxy-2-naphthol in einer 20 bis 30 gew.-%igen wäßrigen Ammoniumhydrogensulfit-Lösung löst und das Reaktionsgemisch im Autoklaven unter den obenangegebenen Bedingungen umsetzt. Nach Beendigung dieser Reaktion wird der Ansatz bei Raumtemperatur mit Salzsäure auf einen pH-Wert von 1 gestellt. Man rührt das Gemisch noch etwa 1 Stunde nach, wobei die erfindungsgemäße Sulfo-carboxy-aminonaphthalin-Verbindung als inneres Salz ausfällt und isoliert werden kann.

Die erfindungsgemäßen Verbindungen der allgemeinen Formel (1) - im nachfolgenden als Verbindungen (1) bezeichnet - haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Die Abscheidung und Isolierung der Verbindungen (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung.

Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung durch Filtration zu entfernen.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten, insbesondere auf den genannten Fasermaterialien, nach den für wasserlösliche, faserreaktive Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem durch Hitzeeinwirkung oder durch Einwirkung eines alkalisch wirkenden Mittels oder durch beide Maßnahmen fixiert. Solche Färbe- und Fixierweisen sind in der Literatur zahlreich beschrieben (bspw. in der europäischen Patentanmeldungs-Veröffentlichung Nr. 0 181 585 A2). Die Verbindungen (1) zeichnen sich durch hohe Auszieh- und Fixiergrade aus. Insbesondere in den Ausziehverfahren liefern sie, auch in Temperaturbereichen (40 bis 80 °C) Färbungen mit hoher bei einem hohen Fixiergrad.

Die erfindungsgemäßen Färbungen besitzen, insbesondere auf Cellulosefasermaterialien, gute Lichtechtheiten sowohl im trockenen Zustand der Färbung als auch im nassen, beispielsweise mit einer Schweißlösung befeuchteten, Zustand sowie gute Naßechtheiten, wie beispielsweise gute Waschechtheiten bei 60 bis 95 °C, auch in Gegenwart von Perboraten, saure und alkalische Walk-, Überfärbe- und Schweißechtheiten, gute saure und alkalische Schweißechtheiten, eine hohe Dampfbeständigkeit, gute Säure-, Wasser- und Seewasserechtheiten, desweiteren eine gute Plissierechtheit, Bügelechtheit und Reibechtheit. Ebenso besitzen sie eine gute Säurelagerbeständigkeit ("acid fading") beim Lagern von feuchten, noch Essigsäure enthaltendem, gefärbtem Material.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.
Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel A**

a) 283,6 Teile 2-Naphthol-6-carbonsäure werden unter Rühren und Kühlung bei 5 bis 7 °C in 1200 Teile 100%ige Schwefelsäure eingetragen. Man rührt anschließend noch etwa 2 Stunden bei 10 °C und danach noch etwa 2 Stunden bei 20 °C nach, bis keine Ausgangsverbindung mehr vorhanden ist (nachweisbar mittels HPLC-Analyse).
Das Reaktionsgemisch wird danach auf 2700 Teile Eis gerührt. Es bildet sich ein Niederschlag, der abgesaugt und anschließend in Eiswasser suspendiert wird. Die Suspension wird mit Natriumcarbonat auf einen pH-Wert zwischen 4 und 4,5 gestellt, das Produkt abgesaugt, mit 10%iger wäßriger Natriumchloridlösung gewaschen und unter reduziertem Druck bei 40 °C getrocknet.
b) 269,2 Teile 1-Sulfo-6-carboxy-2-naphthol werden in 720 Teilen einer wäßrigen, 25%igen Ammoniumhydrogensulfit-Lösung im Autoklaven bei 150 °C und einem Druck von 12 bar während etwa 8 Stunden gerührt. Danach läßt man das Reaktionsgemisch abkühlen und stellt bei Raumtemperatur mit Salzsäure einen pH-Wert von 1 ein. Man rührt noch eine Stunde nach und isoliert sodann die als inneres Salz ausgefallene erfindungsgemäße Verbindung in einer Ausbeute von etwa 70 % d.Th.

Die Konstitution des erfindungsgemäßen 1-Sulfo-6-carboxy-2-amino-naphthalins ist durch $^{1}H$- und $^{13}C$-NMR-Spektroskopie sowie durch die Elementaranalyse bestätigt.

Das 1-Sulfo-6-carboxy-2-amino-naphthalin kann in üblicher Weise diazotiert werden.

**Beispiel 1**

In eine wäßrige, salzsaure Lösung des Diazoniumsalzes aus 27 Teilen 1-Sulfo-6-carboxy-2-amino-naphthalin gibt man unter Rühren bei 5 °C eine wäßrige Suspension von 31,9 Teilen 1-Amino-3,6-disulfo-8-naphthol und führt die Kupplungsreaktion bei einem pH-Wert zwischen 1 und 2 durch. Sodann gibt man die wäßrige, salzsaure Suspension des Diazoniumsalzes des Kondensationsproduktes hinzu, das durch Umsetzung von 18,8 Teilen 1,3-Phenylendiamin-4-sulfonsäure mit 18,4 Teilen Cyanurchlorid bei einem pH-Wert von 2,5 und einer Temperatur von 10 °C erhalten wird. Die zweite Kupplungsreaktion wird bei einem pH-Wert zwischen 5 und 6 ausgeführt. Danach gibt man eine wäßrige Lösung von 31 Teilen 4-($\beta$-Sulfatoethyl-sulfonyl)-1-($\beta$-aminoethyl)-benzol hinzu und führt die Kondensationsreaktion bei einem pH-Wert zwischen 6,0 und 6,5 und einer Temperatur von 30 °C zu Ende und fällt die entstandene erfindungsgemäße Azoverbindung durch Zusatz von Natriumchlorid aus.

Man erhält ein schwarzes, elektrolythaltiges Pulver des Alkalimetallsalzes der Verbindung der Formel

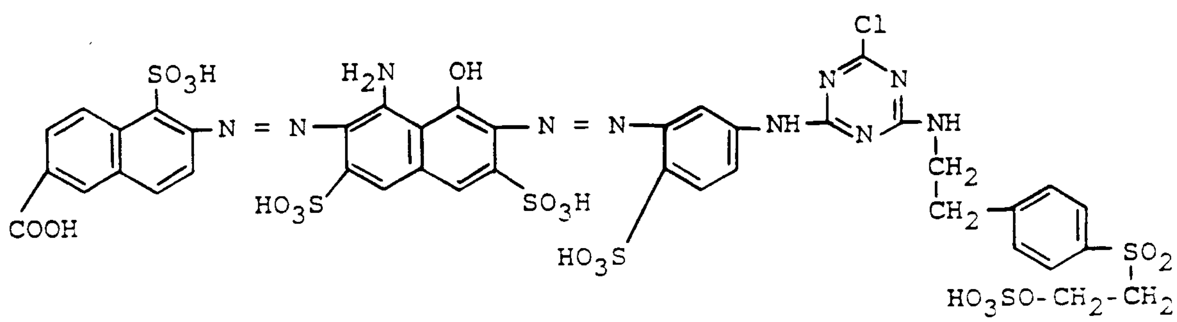

($\lambda_{max}$ = 594 nm)

das sehr gute faserreaktive Farbstoffeigenschaften besitzt und beispielsweise Baumwolle nach den für faserreaktive Farbstoffe üblichen Färbe- und Druckverfahren in echten marineblauen Tönen färbt.

**Beispiele 2 bis 10**

In den nachfolgenden Tabellenbeispielen sind weitere erfindungsgemäße Disazoverbindungen entsprechend einer allgemeinen Formel (A)

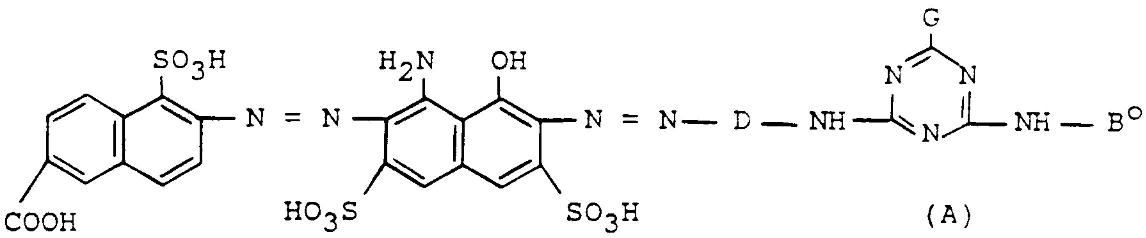

(A)

worin B° den Rest einer Aminoverbindung entsprechend der allgemeinen Formel (11a) bedeutet,

mit Hilfe der dort angegebenen Komponenten beschrieben. Sie lassen sich in erfindungsgemäßer Weise, beispielsweise analog dem Ausführungsbeispiel 1, herstellen. Diese neuen Disazoverbindungen besitzen ebenfalls sehr gute faserreaktive Farbstoffeigenschaften und färben insbesondere Cellulosefasermaterialien in dem für das jeweilige Tabellenbeispiel angegebenen kräftigen echten Farbton.

| | Disazoverbindung der Formel (A) | | | |
|---|---|---|---|---|
| Bsp. | Rest -D- | Rest G | Rest -NH-B° | Farbton |
| 2 | 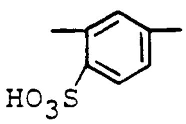 | Chlor | 4-(ß-Sulfatoethyl-sulfonyl)-phenyl-amino | marineblau |
| 3 | 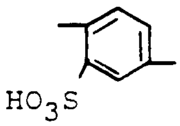 | Chlor | dito | dito |
| 4 | dito | Fluor | dito | dito |
| 5 | 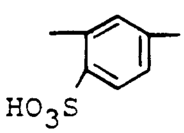 | Fluor | dito | dito |
| 6 | dito | Fluor | 3-(ß-Sulfatoethyl-sulfonyl)-phenylamino | dito |
| 7 | dito | Chlor | dito | dito |

| Bsp. | Disazoverbindung der Formel (A) Rest -D- | Rest G | Rest -NH-B° | Farbton |
|---|---|---|---|---|
| 8 | dito | Fluor | ß-[4-(ß'-Sulfatoethylsulfonyl)-phenyl]-ethylamino | marineblau |
| 9 | dito | Methoxy | 4-(ß-Sulfatoethylsulfonyl)-phenylamino | dito |
| 10 | dito | Chlor | 2-Sulfo-4-(ß-sulfatoethylsulfonyl)-phenylamino | dito |

**Beispiel 11**

58,2 Teile des binären Kondensationsproduktes aus 1,3-Phenylendiamin-4-sulfonsäure, Cyanurchlorid und 4-(β-Sulfatoethylsulfonyl)-anilin werden in üblicher Weise in salzsaurer Lösung diazotiert, sodann mit einer Suspension von 30,8 Teilen 1-Amino-8-naphthol-3,6-disulfonsäure in 300 Teilen Wasser sauer gekuppelt. Die so hergestellte rote Monoazoverbindung wird anschließend mit 27 Teilen salzsauer diazotiertem 1-Sulfo-6-carboxy-2-amino-naphthalin versetzt, der Ansatz neutral gestellt und die Kupplungsreaktion zum Disazofarbstoff im neutralen Bereich zu Ende geführt. Die erfindungsgemäße Verbindung wird durch Kaliumchlorid ausgefällt. Nach Trocknen erhält man ein schwarzes elektrolythaltiges Pulver mit dem Alkalimetallsalz der Verbindung der Formel

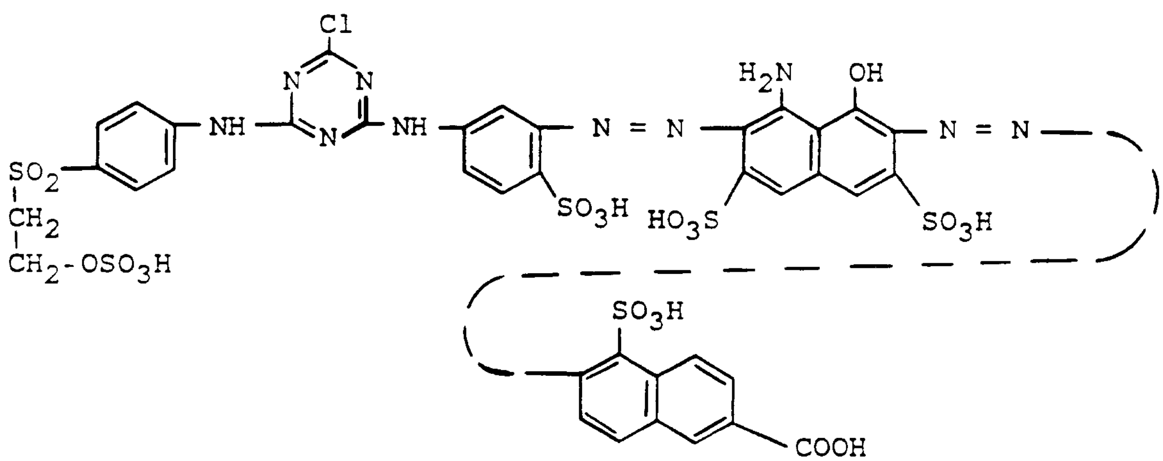

die nach den in der Anwendungstechnik für faserreaktive Farbstoffe üblichen Färbe- und Druckverfahren beispielsweise auf Baumwolle rotstichig marineblaue Färbungen mit guten Echtheiten liefert.

**Beispiele 12 bis 18**

Weitere erfindungsgemäße Farbstoffe entsprechend einer allgemeinen Formel (B)

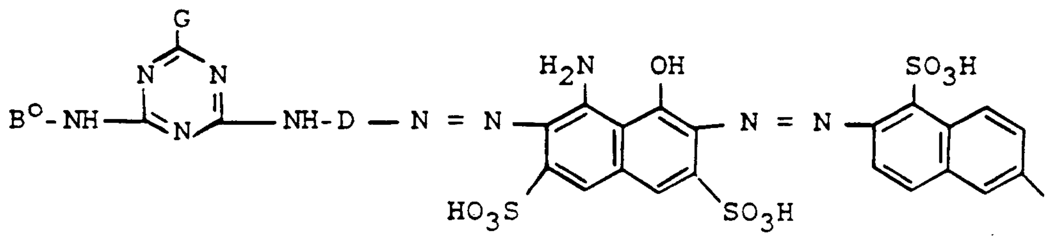

(B)

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 11, herstellen und besitzen ebenfalls sehr gute faserreaktive Farbstoffeigenschaften. Sie färben insbesondere Cellulosefasermaterialien in dem für das jeweilige Tabellenbeispiel angegebenen kräftigen Farbton.

| | Disazoverbindung der Formel (B) | | | |
|---|---|---|---|---|
| Bsp. | Rest -D- | Rest G | Rest $B^o$-NH- | Farbton |
| 12 | 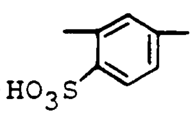 | Fluor | 4-(ß-Sulfatoethyl-sulfonyl)-phenylamino | marineblau |
| 13 | dito | Methoxy | dito | dito |
| 14 | dito | Chlor | ß-[2-Sulfo-4-(ß-sulfatoethylsulfonyl)-phenyl]-ethylamino | marineblau |
| 15 | 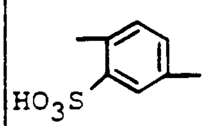 | Chlor | 4-(ß-Sulfatoethyl-sulfonyl)-phenylamino | dito |
| 16 | dito | Fluor | dito | dito |
| 17 | dito | Fluor | 3-(ß-Sulfatoethylsulfonyl)-phenylamino | dito |
| 18 | dito | Chlor | dito | dito |

**Beispiel 19**

27 Teile 1-Sulfo-6-carboxy-2-amino-naphthalin werden salzsauer diazotiert und mit 15 Teilen 3-Acetylamino-anilin gekuppelt. Diese Azoverbindung wird mit 19 Teilen fein dispergiertem Cyanurchlorid bei einer Temperatur von 40 °C und einem pH-Wert von 4,5 acyliert, das Monokondensationsprodukt mit 31 Teilen 4-($\beta$-Sulfatoethylsulfonyl)-1-($\beta$-aminoethyl)-benzol umgesetzt. Der Ansatz wird anschließend neutral gestellt und die gebildete Azoverbindung mit Natriumchlorid ausgesalzen und isoliert. Man erhält das Alkalimetallsalz der Verbindung der Formel

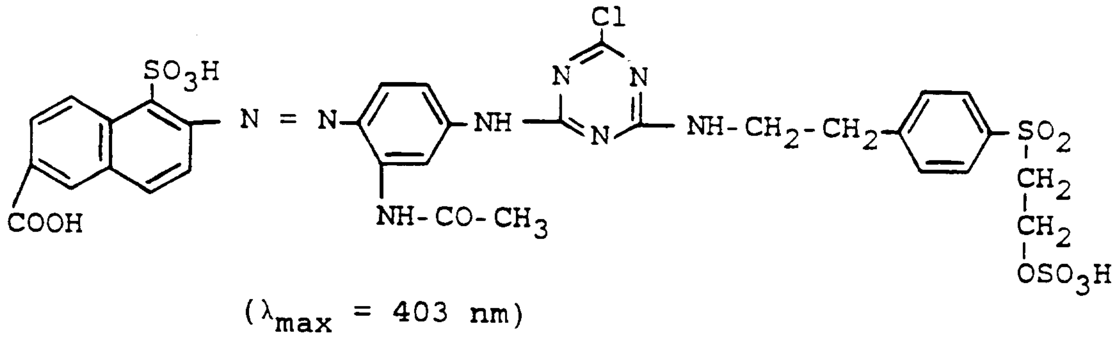

($\lambda_{max}$ = 403 nm)

das beispielsweise Baumwolle nach üblichen Färbeverfahren für faserreaktive Farbstoffe in echten rotstichig gelben Tönen färbt.

**Beispiele 20 bis 31**

Weitere erfindungsgemäße Farbstoffe entsprechend einer allgemeinen Formel (C)

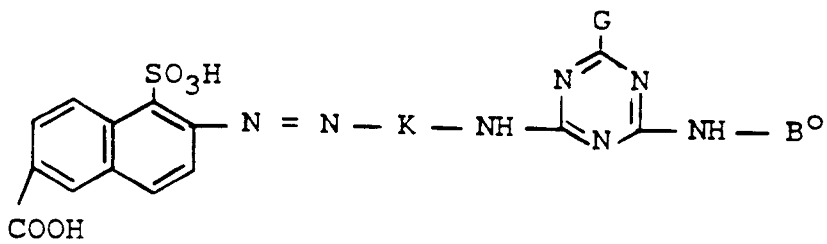

(C)

in welcher -HN-B° für den Rest eines Ausgangsamins der allgemeinen Formeln (11) und K für den Rest einer aminogruppenhaltigen Kupplungskomponente entsprechend der Formel $H-K-NH_2$ steht, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 19, herstellen und besitzen ebenfalls sehr gute faserreaktive Farbstoffeigenschaften und färben insbesondere Cellulosefasermaterialien in dem für das jeweilige Tabellenbeispiel angegebenen kräftigen echten Farbton.

| Bsp. | Azoverbindung der Formel (C) Rest G | Kupplungskomp. H-K-$NH_2$ | Rest -HN-$B^o$ | Farbton |
|---|---|---|---|---|
| 20 | Chlor | 3-Acetylamino-anilin | 4-(ß-Sulfato-ethylsulfonyl)-phenylamino | goldgelb |
| 21 | Chlor | 3-Propionylamino-anilin | dito | goldgelb |
| 22 | Chlor | 3-Ureido-anilin | dito | goldgelb (422) |
| 23 | Fluor | dito | dito | goldgelb |
| 24 | Fluor | dito | 3-(ß-Sulfato-ethylsulfonyl)-phenylamino | goldgelb |
| 25 | Chlor | dito | dito | goldgelb |
| 26 | Chlor | 3-(N'-Phenyl-ureido)-anilin | 2-Sulfo-5-(ß-sulfatoethyl-sulfonyl)-phenylamino | goldgelb |
| 27 | Fluor | 3-(N'-Methyl-ureido)-anilin | γ-(ß'-Sulfato-ethylsulfonyl)-propylamin | goldgelb |
| 28 | Fluor | 3-Acetylamino-anilin | 4-(ß-Sulfato-ethylsulfonyl)-phenylamino | goldgelb |
| 29 | Chlor | 3-Methyl-anilin | dito | goldgelb |
| 30 | Chlor | 3-Acetylamino-anilin | 2-Sulfo-5-(ß-sulfatoethyl-sulfonyl)-phenylamino | goldgelb (449) |
| 31 | Fluor | 3-Ureido-anilin | ß-[4-(ß'-Sulfatoethylsulfonyl)-phenyl]-ethylamino | gelb (402) |

**Beispiel 32**

18,4 Teile Cyanurchlorid werden in bekannter Weise mit 31,9 Teilen 1-Amino-3,6-disulfo-8-naphthol in Wasser zum Monokondensationsprodukt umgesetzt, das sodann mit der Lösung des Diazoniumsalzes von 1-Sulfo-6-carboxy-2-amino-naphthalin in entsprechend äquivalenter Menge versetzt wird; die Kupplungsreaktion erfolgt bei einem pH-Wert zwischen 4 und 4,5. Nach beendeter Kupplung werden 30,9 Teile 4-(β-Sulfatoethylsulfonyl)-1-(β-aminoethyl)-benzol hinzugegeben und die Kondensationsreaktion bei einem pH-Wert zwischen 5 und 6,5 und bei 20°C durchgeführt. Die erfindungsgemäße Azoverbindung wird in üblicher Weise aus der Syntheselösung isoliert. Man erhält das Natriumsalz der Verbindung der Formel

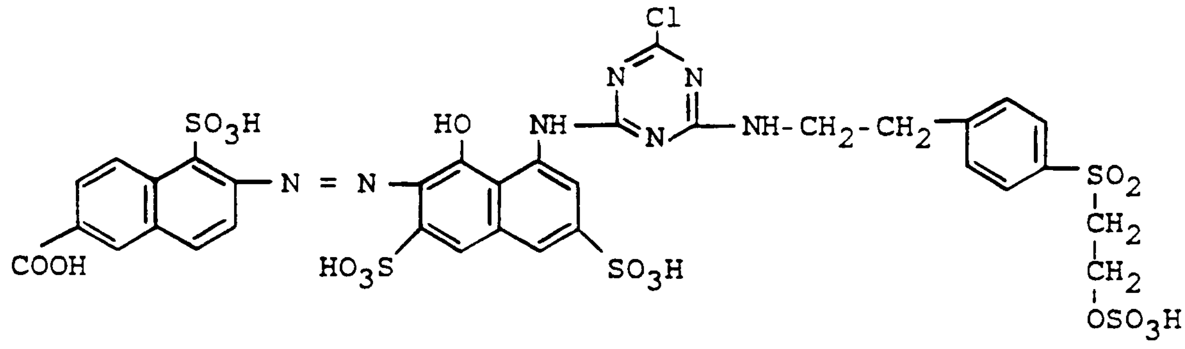

($\lambda_{max}$ = 519 nm)

das beispielsweise Baumwolle in leuchtend roten, sehr brillanten Tönen färbt.

**Beispiel 33**

31,9 Teile 1-Amino-3,6-disulfo-8-naphthol werden mit 18,5 Teilen Cyanurchlorid in 50 Teilen Wasser und 200 Teilen Eis bei einem pH-Wert von 2,5 und einer Temperatur von 10 ° C kondensiert. Anschließend gibt man zu dieser Syntheselösung eine Lösung mit einem pH-Wert von 4,5 von 28,2 Teilen 4-($\beta$-Sulfatoethylsulfonyl)-anilin in 200 Teilen Wasser hinzu und führt die zweite Kondensationsreaktion bei einem pH-Wert von 5 durch. Anschließend gibt man eine auf üblichem Wege salzsauer mit Natriumnitrit diazotierte Lösung des Diazoniumsalzes aus 27 Teilen 1-Sulfo-6-carboxy-2-amino-naphthalin in etwa 450 Teilen Wasser zu der so erhaltenen Lösung der Kupplungskomponente, stellt einen pH-Wert von 5 bis 6 ein und führt die Kupplungsreaktion innerhalb dieses pH-Bereiches bei einer Temperatur von etwa 20 ° C durch.

Die erfindungsgemäße Azoverbindung wird mit Natriumchlorid ausgesalzen und isoliert. Sie besitzt, in Form der freien Säure geschrieben, die Formel

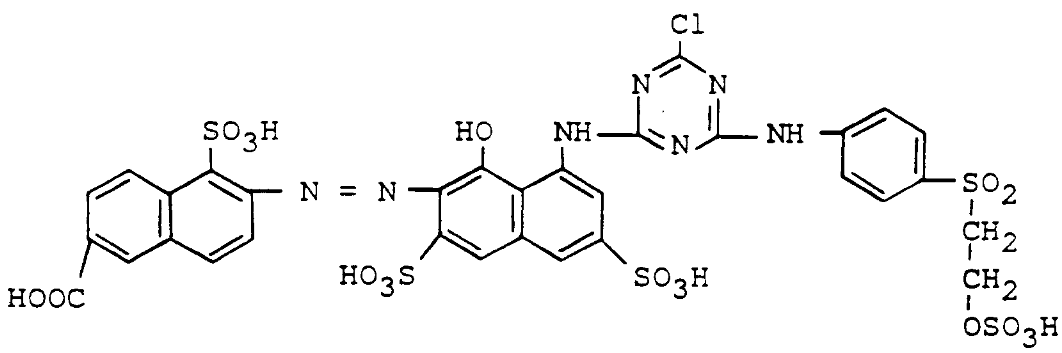

($\lambda_{max}$ = 545 nm)

und besitzt sehr gute faserreaktive Farbstoffeigenschaften. Nach den in der Technik üblichen Anwendungsverfahren für faserreaktive Farbstoffe erhält man farbstarke Färbungen und Drucke in echten, blaustichig roten Tönen mit hoher Brillanz.

**Beispiel 34**

Man setzt 55,5 Teile Cyanurchlorid in bekannter Weise zunächst mit 96 Teilen 1-Amino-3,6-disulfo-8-naphthol und anschließend das so erhaltene Monokondensationsprodukt mit 84,3 Teilen 3-($\beta$-Sulfatoethylsulfonyl)-anilin zum Dikondensationsprodukt um. Zu der wäßrigen Syntheselösung dieses Dikondensationsproduktes gibt man die salzsaure wäßrige Lösung (ca. 680 Teile) des Diazoniumsalzes von 81 Teilen 1-Sulfo-6-carboxy-2-amino-naphthalin hinzu, stellt mittels Natriumbicarbonat einen pH-Wert zwischen 4 und 5 ein und führt die Kupplungsreaktion innerhalb dieses pH-Bereiches und bei einer Temperatur von 20 ° C durch.

Die gebildete Azoverbindung wird mit Natriumchlorid ausgefällt und isoliert. Man erhält das Natriumsalz der Verbindung der Formel

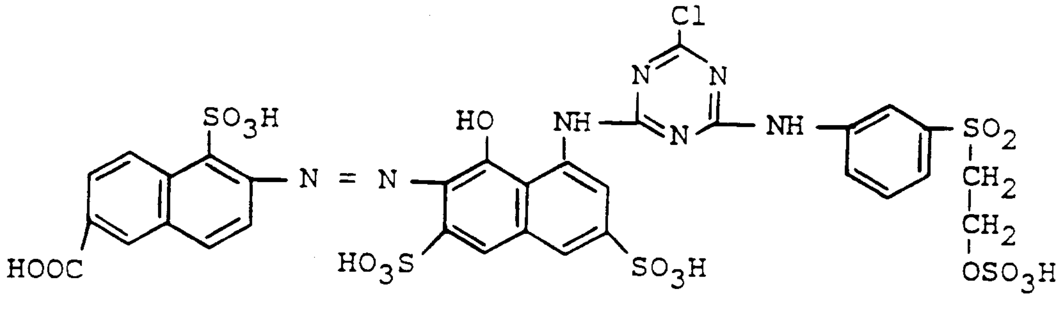

($\lambda_{max}$ = 545 nm).

Die erfindungsgemäße Azoverbindung zeigt sehr gute faserreaktive Farbstoffeigenschaften. Sie liefert nach den anwendungstechnischen Verfahren für faserreaktive Farbstoffe farbstarke blaustichig rote Färbungen und Drucke. Sowohl im Klotz-Kurzverweil-Färbeverfahren als auch bei den Ausziehverfahren bei Färbetemperaturen zwischen 40 und 80 ° C zeigen die erhältlichen Färbungen einen guten Farbaufbau.

**Beispiel 35**

20 Teile Cyanurchlorid werden in bekannter Weise zunächst mit 30 Teilen 4-(β-Sulfatoethylsulfonyl)-anilin und das daraus erhaltene Monokondensationsprodukt mit 26 Teilen 3-Amino-8-naphthol-6-sulfonsäure zum Dikondensationsprodukt umgesetzt. Zu der wäßrigen Lösung dieses Kondensationsproduktes gibt man die salzsaure Diazoniumsalzlösung von 27 Teilen 1-Sulfo-6-carboxy-2-amino-naphthalin, stellt einen pH-Wert von 4 bis 5 ein und führt die Kupplungsreaktion innerhalb dieses pH-Bereiches und bei einer Temperatur von 15 bis 20 ° C durch.

Die erfindungsgemäße Azoverbindung wird nach Beendigung der Synthese aus der Syntheselösung mit Natriumchlorid ausgefällt und isoliert. Man erhält das Natriumsalz der Verbindung der Formel

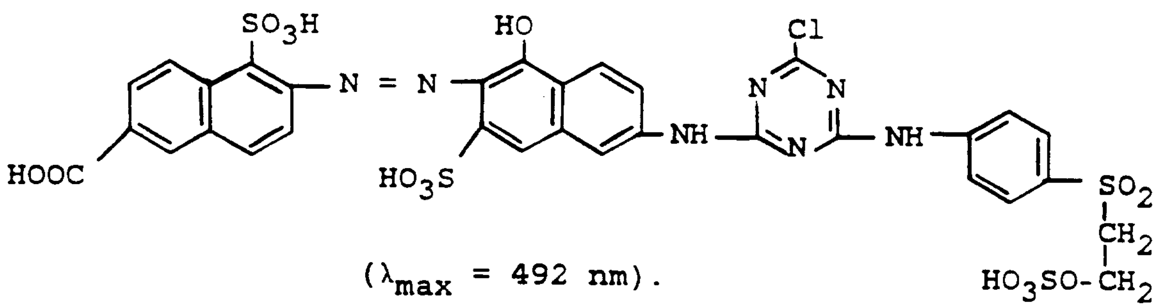

($\lambda_{max}$ = 492 nm).

Die erfindungsgemäße Verbindung besitzt sehr gute faserreaktive Farbstoffeigenschaften und färbt beispielsweise Baumwolle in brillanten, rotorangen Tönen mit guten Echtheitseigenschaften.

**Beispiel 36**

31,9 Teile 1-Amino-3,6-disulfo-8-naphthol werden mit 18,5 Teilen Cyanurchlorid bei einem pH-Wert von 2,5 und einer Temperatur von 10 ° C kondensiert.

Parallel hierzu werden 27,0 Teile 1-Sulfo-6-carboxy-2-amino-naphthalin in üblicher Weise diazotiert; dieser Diazoniumsalzansatz wird anschließend mit einer Lösung von 9,3 Teilen Anilin in 50 Volumenteilen einer wäßrigen, 0,5n-Salzsäure versetzt, die Kupplungsreaktion bei 20 bis 30 ° C durchgeführt und das gebildete 4-(1'-Sulfo-6'-carboxy-naphth-2'-yl)-azo-anilin in üblicher Weise durch Zusatz von 20 Teilen einer wäßrigen 5n-Natriumnitritlösung diazotiert.

Man gibt die beiden Reaktionsansätze zusammen und führt die zweite Kupplungsreaktion bei einem pH-Wert von 3 bis 4 durch. Anschließend werden 55,8 Teile 4-(β-Hydroxyethylsulfonyl)-1-(β-aminoethyl)-benzol hinzugegeben und die Kondensationsreaktion erfolgt analog der Verfahrensweise des Beispieles 1. Nach Überführung der Azoverbindung in die Sulfatoform, bspw. analog dem Beispiel 19, und deren

Isolierung durch Aussalzen erhält man das Alkalimetallsalz der Verbindung der Formel

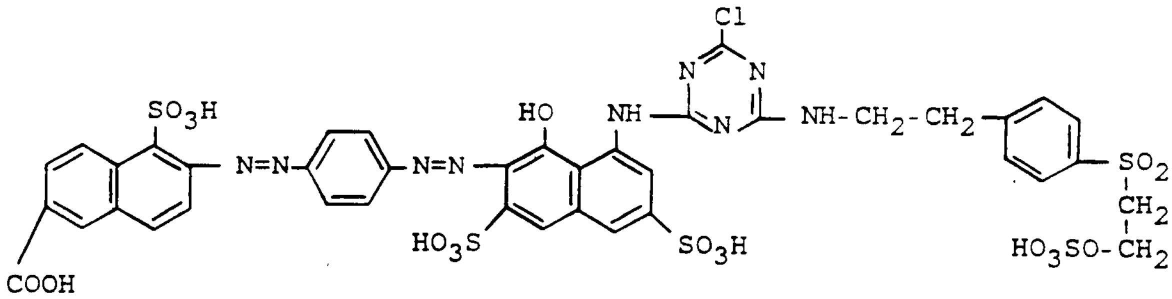

die nach üblichen Färbeverfahren beispielsweise Baumwolle in sehr echten rotvioletten Tönen färbt.

**Beispiele 37 bis 52**

Weitere erfindungsgemäße Farbstoffe entsprechend einer allgemeinen Formel (D)

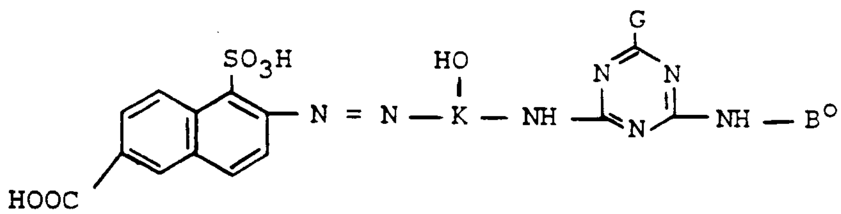

(D)

sind in den nachfolgenden Tabellenbeispielen mit Hilfe der allgemeinen Formel (D) und der darin angegebenen Formelreste beschrieben. Sie lassen sich in erfindungsgemäßer Weise, beispielsweise analog den obigen Ausführungsbeispielen, herstellen und besitzen ebenfalls sehr gute faserreaktive Farbstoffeigenschaften. Nach den für faserreaktive Farbstoffe üblichen Applikations- und Fixierverfahren färben sie insbesondere Cellulosefasermaterialien in dem für das jeweilige Tabellenbeispiel angegebenen kräftigen echten Farbton.

| | Azoverbindung der Formel (D) | | | |
|---|---|---|---|---|
| Bsp. | Rest G | Kupplungskomponente H-K(OH)-$NH_2$ | Rest -HN-$B^o$ | Farbton |
| 37 | Chlor | 1-Amino-3,6-disulfo-8-naphthol | ß-[2-Sulfo-4-(ß'-sulfato-ethylsulfonyl)-phenyl]-ethylamino | rot |
| 38 | Chlor | dito | γ-(ß'-Sulfato-ethylsulfonyl)-propylamino | rot |

| Bsp. | Azoverbindung der Formel (D)<br>Rest G | Kupplungskomponente<br>H-K-(OH)-$NH_2$ | Rest -HN-$B^o$ | Farbton |
|---|---|---|---|---|
| 39 | Chlor | dito | 2-Sulfo-(5-ß-sulfatoethylsulfonyl)-phenylamino | rot |
| 40 | Methoxy | dito | 4-(ß-Sulfatoethylsulfonyl)-phenylamino | rot |
| 41 | Chlor | 1-Amino-4,6-disulfo-8-naphthol | dito | rot |
| 42 | Chlor | dito | 3-(ß-Sulfatoethylsulfonyl)-phenylamino | rot |
| 43 | Chlor | 1-Amino-4-sulfo-8-naphthol | 4-(ß-Sulfatoethylsulfonyl)-phenylamino | scharlach |
| 44 | Chlor | dito | 3-(ß-Sulfatoethylsulfonyl)-phenylamino | scharlach |
| 45 | Chlor | 2-Amino-6-sulfo-8-naphthol | 4-(ß-Sulfatoethylsulfonyl)-phenylamino | rotorange (508) |
| 46 | Fluor | dito | dito | rotorange (508) |
| 47 | Chlor | 2-Amino-7-sulfo-5-naphthol | dito | orange |
| 48 | Fluor | dito | dito | orange |
| 49 | Chlor | 2-Amino-6-sulfo-8-naphthol | 3-(ß-Sulfatoethylsulfonyl)-phenylamino | rotorange (508) |
| 50 | Chlor | dito | ß-[4-(ß'-Sulfatoethylsulfonyl)-phenyl]-ethylamino | rotorange |
| 51 | Chlor | 1-Amino-3,6-disulfo-8-naphthol | 4-Vinylsulfonylphenylamino | rot |
| 52 | Fluor | dito | ß-[4-(ß'-Sulfatoethylsulfonyl)-phenyl]-ethylamino | rot |

**Beispiel 53**

Eine Lösung mit einem pH-Wert von 6,5 von 43,5 Teilen der Aminodisazoverbindung der Formel

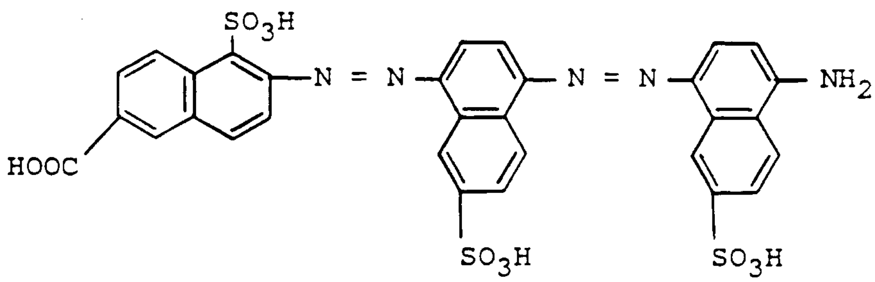

in 300 Teilen Wasser wird bei 0 bis 5 °C und bei einem pH-Wert von 4,5 mit 18,4 Teilen Cyanurchlorid umgesetzt (die Ausgangs-Aminodisazoverbindung wird in üblicher Weise der Herstellung solcher Disazoverbindungen durch Kupplungsreaktion des Diazoniumsalzes von 1-Sulfo-6-carboxy-2-amino-naphthalin mit 7-Sulfo-1-amino-naphthalin, Diazotierung der so erhaltenen Aminoazoverbindung und Kupplung mit 7-Sulfo-1-amino-naphthalin erhalten). Das Umsetzungsprodukt dieser Amino-Disazoverbindung mit Cyanurchlorid wird anschließend in dessen Syntheselösung mit 30,9 Teilen 4-(β-Sulfatoethylsulfonyl)-1-(β-aminoethyl)-benzol bei einer Temperatur von 20 °C und einem pH-Wert zwischen 5 und 6,5 umgesetzt.

Die erfindungsgemäße Disazoverbindung wird in üblicher Weise als Alkalimetallsalz isoliert. Es besitzt in Form der freien Säure geschrieben die Formel

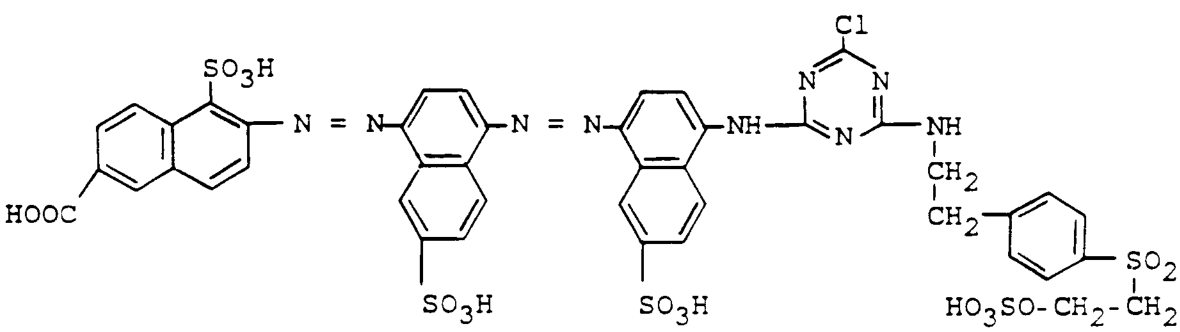

zeigt sehr gute faserreaktive Farbstoffeigenschaften und färbt die in der Beschreibung genannten Materialien, wie insbesondere Cellulosefasermaterialien, beispielsweise Baumwolle, nach den in der Technik üblichen Applikations-und Fixierverfahren in kräftigen, echten, rötlich braunen Tönen.

**Beispiele 54 bis 58**

In den nachfolgenden Tabellenbeispielen sind weitere erfindungsgemäße Disazoverbindungen entsprechend der allgemeinen Formel (E)

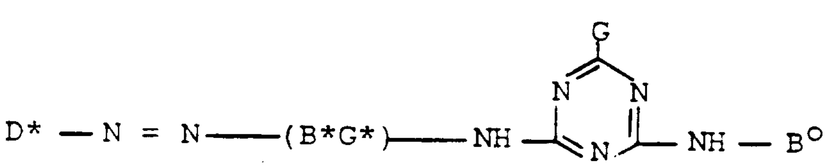

(E)

mit Hilfe dieser Formel und deren einzelnen Formelglieder beschrieben, wobei D* der 1-Sulfo-6-carboxy-naphth-2-yl-Rest ist. Sie lassen sich in erfindungsgemäßer Weise, beispielsweise analog dem Ausführungsbeispiel 53, herstellen und zeichnen sich ebenfalls durch sehr gute faserreaktive Farbstoffeigenschaften aus. Sie liefern insbesondere auf Baumwolle, nach den bekannten Applikations- und Fixierverfahren farbstarke, echte Färbungen und Drucke mit dem in dem jeweiligen Tabellenbeispiel angegebenen Farbton.

Disazoverbindung der Formel (E)

| Bsp. | Rest -(B*G*)- | Rest G | Rest -NH-B° | Farbton |
|---|---|---|---|---|
| 54 | 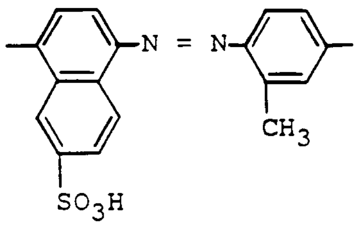 | Chlor | 4-(ß-Sulfato-ethylsulfonyl)-phenylamino | braun |
| 55 | 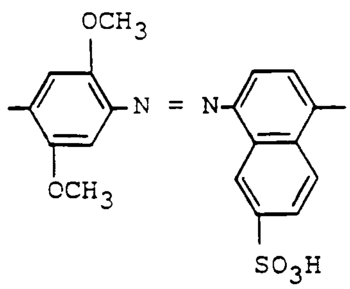 | Fluor | dito | rotbraun |
| 56 | 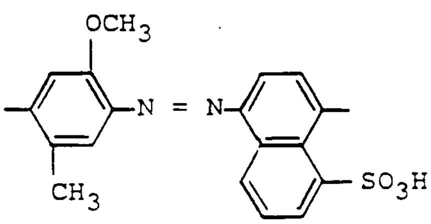 | Chlor | 3-(ß-Sulfato-ethylsulfonyl)-phenylamino | orange-braun |
| 57 | 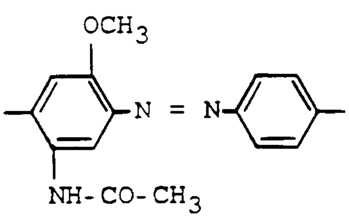 | Chlor | 4-(ß-Sulfato-ethylsulfonyl)-phenylamino | orange-braun |
| 58 | 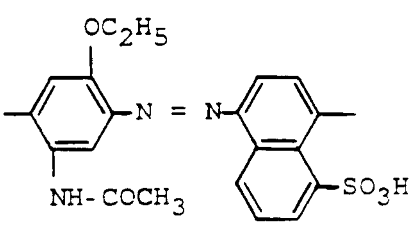 | Chlor | ß-[4-(ß-Sulfatoethylsulfonyl)-phenyl]-ethylamino | rotbraun |

## Patentansprüche

1. Azoverbindung entsprechend der allgemeinen Formel (1)

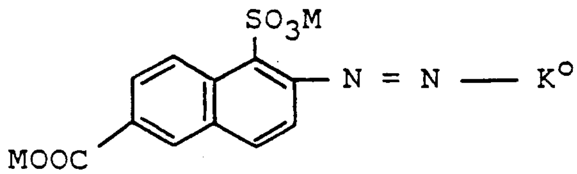

(1)

in welcher bedeuten:

M ist ein Wasserstoffatom oder salzbildendes Metallatom, vorzugsweise ein Alkalimetallatom;

K° ist ein Rest der allgemeinen Formel (2A) oder (2B)

$$-(E-N=N)_v-K-Z \quad (2A)$$

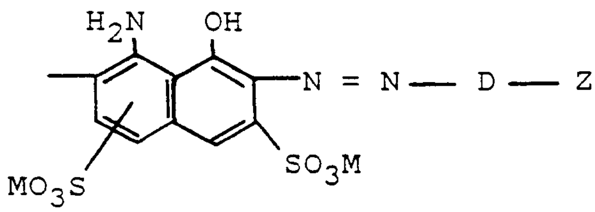

(2B)

in welchen

M die obengenannte Bedeutung besitzt,

K der bivalente, von einer nachstehend definierten Gruppe der Formel -N(R°)- freie Rest einer wasserlöslichen aminogruppenhaltigen Kupplungskomponente ist,

Z ein Rest der allgemeinen Formel (3)

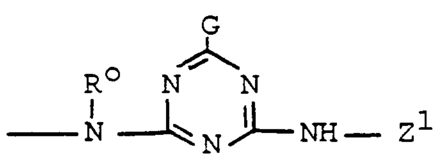

(3)

ist, in welcher

R° Wasserstoff oder Alkyl von 1 bis 4 C-Atomen oder Alkyl von 1 bis 4 C-Atomen, das durch Sulfo, Carboxy, Sulfato, Phosphato, Hydroxy, Methoxy, Ethoxy, Phenyl, Monosulfophenyl oder Disulfophenyl substituiert ist, bedeutet,

G Halogen, Methoxy oder Hydroxy ist oder einen gegebenenfalls substituierten Anilinorest bedeutet, wobei einer der Substituenten auch eine faserreaktive Gruppe sein kann, und

$Z^1$ ein Rest der allgemeinen Formel (3a) oder (3b)

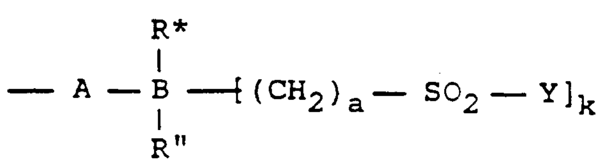

(3a)

$$-alk-SO_2-Y \quad (3b)$$

ist, in welchen

A eine direkte Bindung ist oder ein Alkylen von 2 bis 6 C-Atomen oder ein Phenylen, das durch 1 oder 2 Substituenten aus der Gruppe Methyl, Ethyl, Methoxy, Ethoxy, Chlor, Sulfo und

Carboxy substituiert sein kann,

B ein Benzol- oder Naphthalinrest ist,

R* Wasserstoff, Alkyl von 1 bis 4 C-Atomen, Alkoxy von 1 bis 4 C-Atomen, Fluor, Brom, Chlor, Sulfo, Carboxy, Carbalkoxy von 2 bis 5 C-Atomen, Trifluormethyl, Carbamoyl oder N-($C_1$-$C_4$-Alkyl)-carbamoyl ist, falls B einen Benzolring bedeutet, oder

R* Wasserstoff oder Sulfo ist, falls B einen Naphthalinring bedeutet,

R'' Wasserstoff, Alkyl von 1 bis 4 C-Atomen, Alkoxy von 1 bis 4 C-Atomen, Chlor, Nitro oder Sulfo ist, falls B einen Benzolring bedeutet, oder

R'' Wasserstoff oder Sulfo ist, falls B einen Naphthalinrest bedeutet,

Y die Vinylgruppe ist oder eine Ethylgruppe ist, die in $\beta$-Stellung einen unter Bildung der Vinylgruppe alkalisch eliminierbaren Substituenten enthält,

alk ein Alkylen von 2 bis 6 C-Atomen und bevorzugt die 1,3-Propylen-Gruppe ist,

a die Zahl Null, 1 oder 2 ist und

k die Zahl 1 oder 2 ist,

D einen Rest der allgemeinen Formel (4)

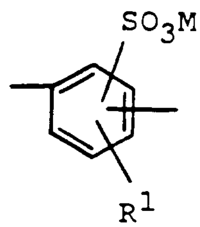 (4)

bedeutet, in welcher

M eine der obengenannten Bedeutungen hat und

$R^1$ Wasserstoff oder Alkyl von 1 bis 4 C-Atomen, ist,

E ein Rest der allgemeinen Formel (5a), (5b), (5c) oder (5d)

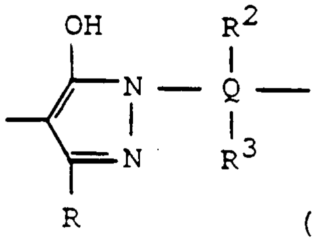 (5a)

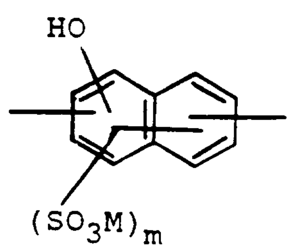 (5b)

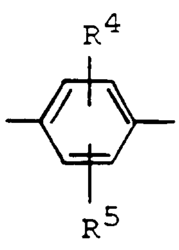 (5c)

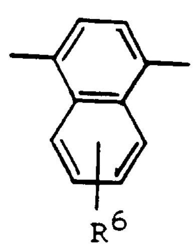 (5d)

ist, in welchen

R Wasserstoff, Alkyl von 1 bis 4 C-Atomen, Cyano, Carboxy, Carbalkoxy von 2 bis 5 C-Atomen, Carbamoyl oder Phenyl ist,

Q ein Benzol- oder Naphthalinrest ist,

$R^2$ Wasserstoff, Alkyl von 1 bis 4 C-Atomen, Alkoxy von 1 bis 4 C-Atomen, Fluor, Brom, Chlor, Sulfo, Carboxy, Carbalkoxy von 2 bis 5 C-Atomen, Trifluormethyl, Carbamoyl oder N-($C_1$-$C_4$-Alkyl)-carbamoyl ist, falls Q einen Benzolring bedeutet, oder

| | |
|---|---|
| $R^2$ | Wasserstoff oder Sulfo ist, falls Q einen Naphthalinring bedeutet, |
| $R^3$ | Wasserstoff, Alkyl von 1 bis 4 C-Atomen, Alkoxy von 1 bis 4 C-Atomen, Chlor oder Sulfo ist, falls Q einen Benzolrest bedeutet, oder Wasserstoff oder Sulfo ist, falls Q einen Naphthalinrest bedeutet, |
| $R^4$ | Wasserstoff, Alkyl von 1 bis 4 C-Atomen, Alkoxy von 1 bis 4 C-Atomen, Brom, Chlor, Trifluormethyl, Sulfo, Carboxy oder Cyano ist, |
| $R^5$ | Wasserstoff, Alkyl von 1 bis 4 C-Atomen, Alkoxy von 1 bis 4 C-Atomen, Chlor, Amino, Alkylamino von 1 bis 4 C-Atomen, Alkanoylamino von 2 bis 5 C-Atomen, Benzoylamino, Ureido, N'-Phenylureido, N'-($C_1$-$C_4$-Alkyl)-ureido, Phenylsulfonyl oder Alkylsulfonyl von 1 bis 4 C-Atomen ist, |
| $R^6$ | Wasserstoff oder Sulfo ist, |
| M | eine der obengenannten Bedeutungen hat, |
| m | die Zahl 1 oder 2 bedeutet, |
| v | die Zahl Null oder 1 ist und |
| -K-N($R^o$)- | der bivalente Rest einer wasserlöslichen, aminogruppenhaltigen Kupplungskomponente ist. |

**2.** Azoverbindung nach Anspruch 1, dadurch gekennzeichnet, daß der Rest -K-N($R^o$)- ein Rest der allgemeinen Formel (6a), (6b), (6c), (6d), (6e), (6f), (6g), (6h) oder (6i)

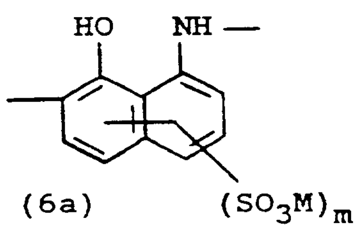
(6a)

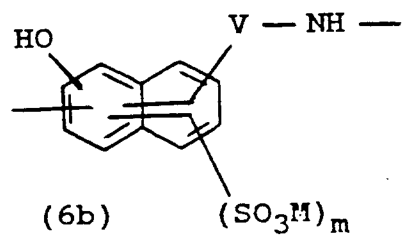
(6b)

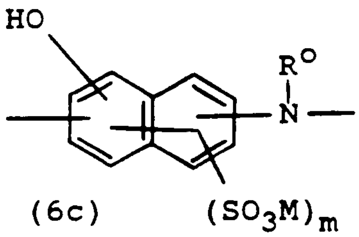

(6c)

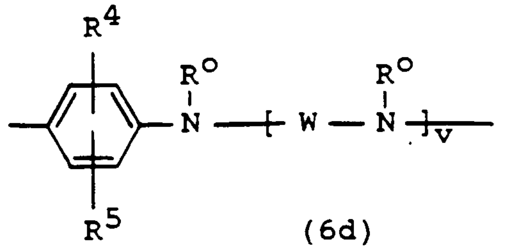

(6d)

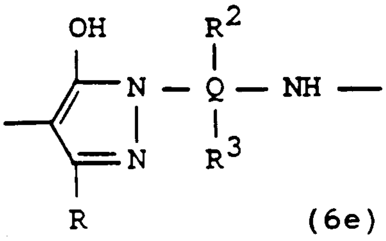

(6e)

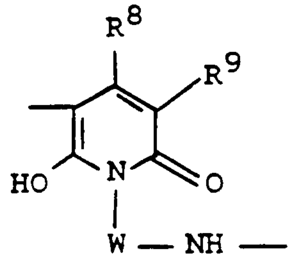

(6f)

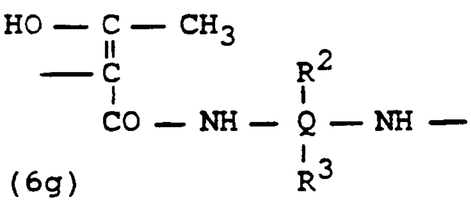

(6g)

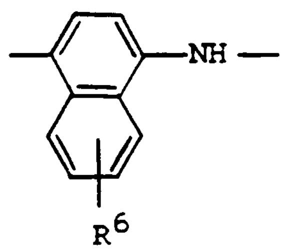

(6h)

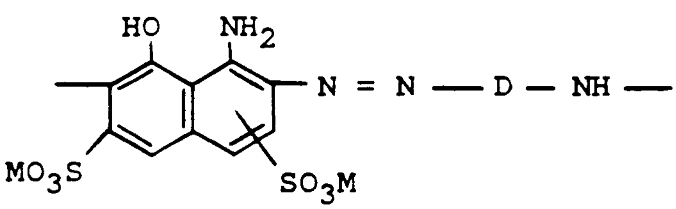

(6i)

ist, in welchen

M, m, v, Q, D, R, $R^o$, $R^1$, $R^2$, $R^3$, $R^4$, $R^5$ und $R^6$ eine der in Anspruch 1 genannten Bedeutungen besitzen,

V eine direkte, kovalente Bindung oder ein Rest der Formel -NH-CO-phenylen- , -NH-CO-NH-phenylen- , $-N(CH_3)-CO-$phenylen- , $-N(CH_3)-CO-NH-$phenylen- oder -NH-phenylen- ist,

W ein Phenylenrest ist, der durch 1 oder 2 Substituenten aus der Gruppe Alkyl von 1 bis 4 C-Atomen, Alkoxy von 1 bis 4 C-Atomen, Chlor, Carboxy und Sulfo substituiert sein kann, oder ein Alkylen von 1 bis 6 C-Atomen, bevorzugt von 1 bis 4 C-Atomen ist oder ein Alkylen-phenylen mit einem Alkylen von 2 bis 4 C-Atomen ist,

$R^8$ Wasserstoff, Alkyl von 1 bis 4 C-Atomen, Alkoxy von 1 bis 4 C-Atomen, Phenyl oder durch Cyano substituiertes Alkyl von 1 bis 4 C-Atomen ist und

$R^9$ Wasserstoff, Sulfo, Sulfoalkyl von 1 bis 4 C-Atomen, Cyano oder Carbamoyl ist.

3. Azoverbindung nach Anspruch 1 oder 2, dadurch gekennzeichnet, daß R Methyl, Carboxy, Carbomethoxy oder Carbethoxy ist.

4. Azoverbindung nach mindestens einem der Ansprüche 1 bis 3, dadurch gekennzeichnet, daß R* Wasserstoff, Methoxy oder Methyl ist, falls B einen Benzolring bedeutet, oder Wasserstoff oder Sulfo ist, falls B einen Naphthalinring bedeutet.

5. Azoverbindung nach mindestens einem der Ansprüche 1 bis 4, dadurch gekennzeichnet, daß R" Wasserstoff, Methoxy, Ethoxy oder Methyl ist, falls Q einen Benzolring bedeutet, oder Wasserstoff oder Sulfo ist, falls Q einen Naphthalinrest bedeutet.

6. Azoverbindung nach mindestens einem der Ansprüche 1 bis 5, dadurch gekennzeichnet, daß $R^2$ Wasserstoff, Methoxy oder Methyl ist, falls B einen Benzolring bedeutet, oder Wasserstoff oder Sulfo ist, falls B einen Naphthalinring bedeutet.

7. Azoverbindung nach mindestens einem der Ansprüche 1 bis 6, dadurch gekennzeichnet, daß $R^3$ Wasserstoff, Methoxy, Ethoxy oder Methyl ist, falls Q einen Benzolring bedeutet, oder Wasserstoff oder Sulfo ist, falls Q einen Naphthalinrest bedeutet.

8. Azoverbindung nach Anspruch 1, dadurch gekennzeichnet, daß $R^4$ Wasserstoff, Methyl oder Sulfo ist und $R^5$ Ureido, Acetylamino oder Propionylamino ist.

9. Azoverbindung nach Anspruch 1 oder 4, dadurch gekennzeichnet, daß $K^o$ ein Rest der allgemeinen Formel (2B)

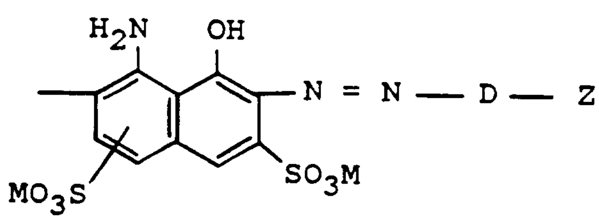

(2B)

ist, in welcher M, D und Z die in Anspruch 1 genannten Bedeutungen haben und $R^o$ Wasserstoff ist.

10. Azoverbindung nach Anspruch 1, dadurch gekennzeichnet, daß $K^o$ einen Rest der allgemeinen Formel

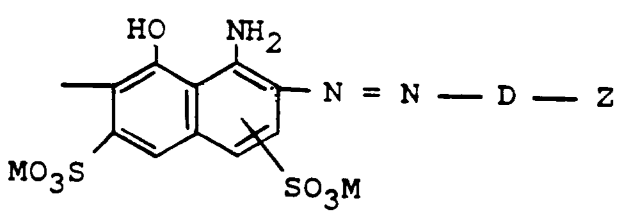

in welcher M, D und Z die in Anspruch 1 genannten Bedeutungen haben und $R^o$ Wasserstoff ist.

11. Azoverbindung nach mindestens einem der Ansprüche 1 bis 10, dadurch gekennzeichnet, daß A eine direkte Bindung ist.

12. Azoverbindung nach mindestens einem der Ansprüche 1 bis 11, dadurch gekennzeichnet, daß a für die Zahl Null steht.

13. Azoverbindung nach mindestens einem der Ansprüche 1 bis 13, dadurch gekennzeichnet, daß G ein Chlor- oder Fluoratom ist.

**14.** Azoverbindung nach Anspruch 1 der allgemeinen Formel

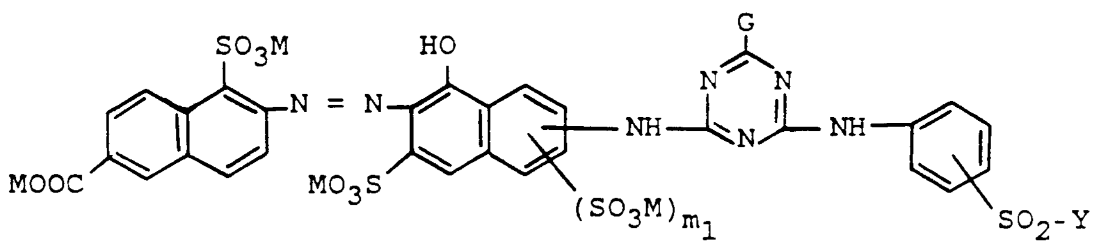

in welcher Y und M die in Anspruch 1 genannten Bedeutungen haben, G gleich Fluor oder Chlor ist und $m_1$ Null oder 1 ist.

**15.** Azoverbindung nach Anspruch 1 der allgemeinen Formel

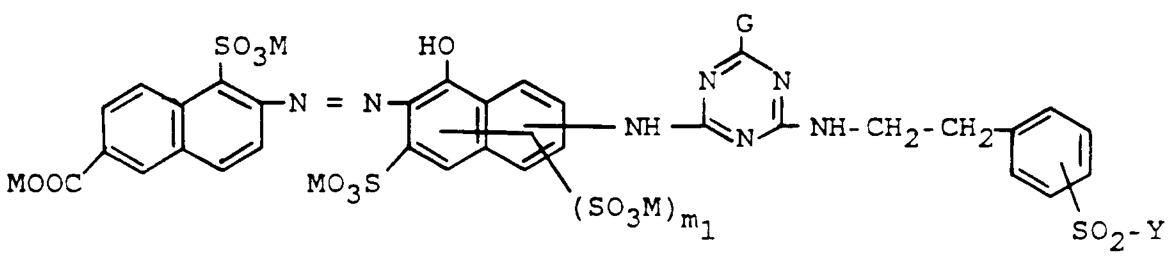

in welcher Y und M die in Anspruch 1 gekennten Bedeutungen haben, G gleich Fluor oder Chlor ist und $m_1$ Null oder 1 ist.

**16.** Azoverbindung nach Anspruch 1 der allgemeinen Formel

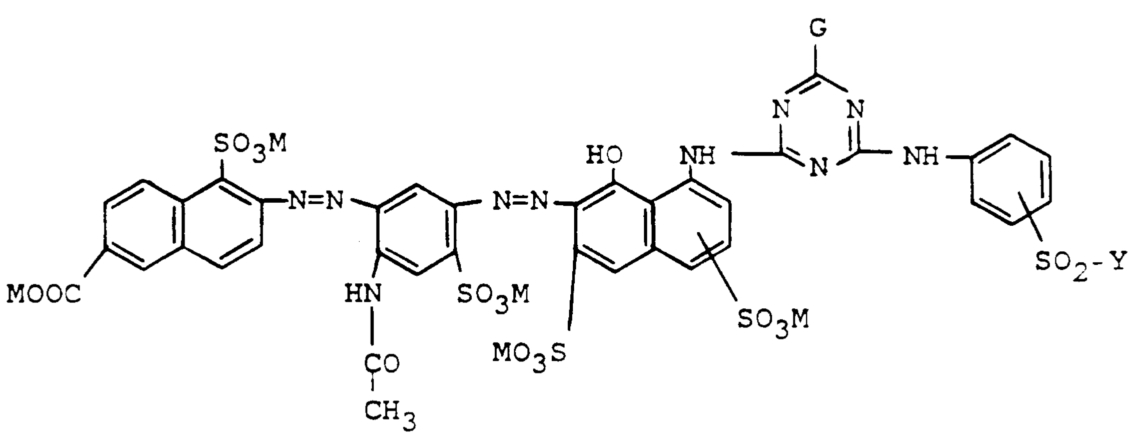

in welcher M und Y die obengenannten Bedeutungen haben und G gleich Fluor oder Chlor ist.

**17.** Azoverbindung nach Anspruch 1 der allgemeinen Formel

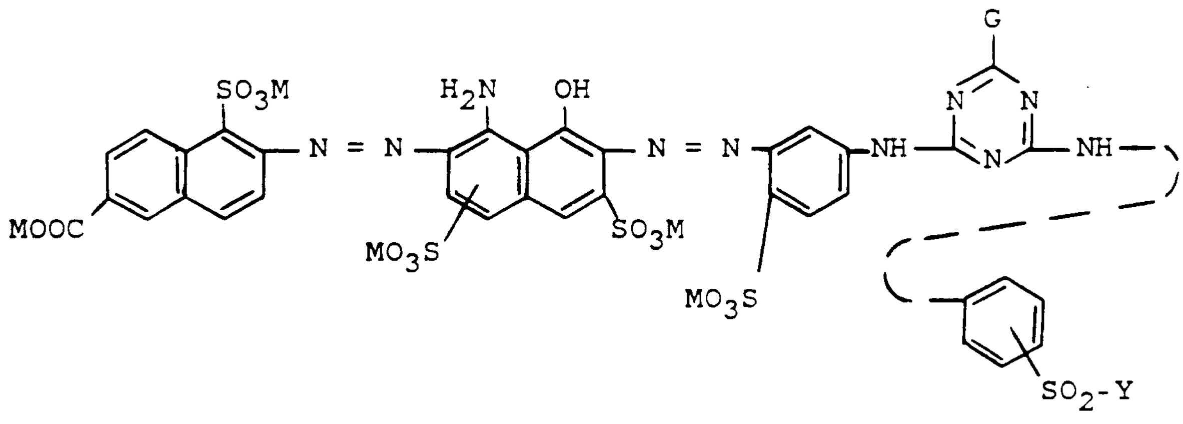

in welcher M und Y die in Anspruch 1 genannten Bedeutungen haben und G gleich Fluor oder Chlor ist.

**18.** Azoverbindung nach Anspruch 1 der allgemeinen Formel

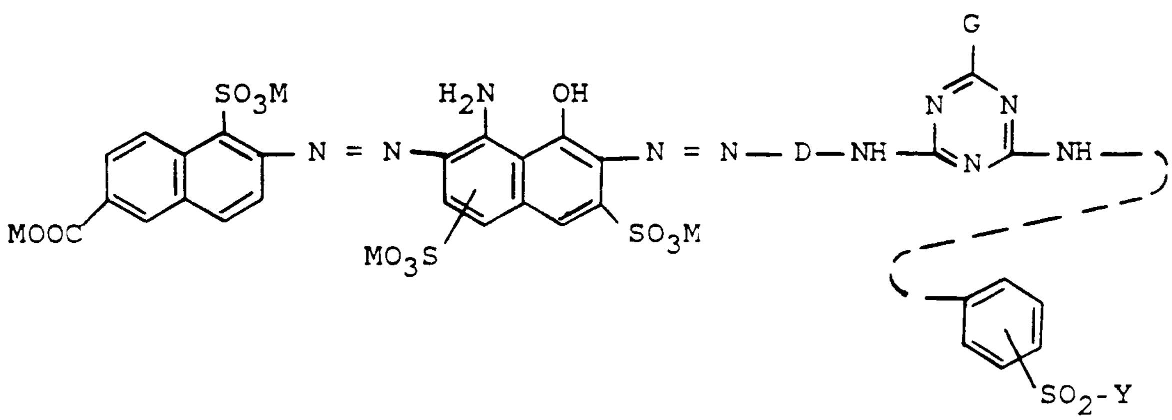

worin D, M und Y die in Aspruch 1 genannten Bedeutungen haben und G gleich Fluor oder Chlor ist.

**19.** Azoverbindung nach mindestens einem der Ansprüche 1 bis 18, dadurch gekennzeichnet, daß Y die Vinylgruppe oder die $\beta$-Sulfatoethyl-Gruppe ist.

**20.** Verfahren zur Herstellung einer Azoverbindung von Anspruch 1, dadurch gekennzeichnet, daß man im Falle, daß K° einen Rest der allgemeinen Formel (2A) bedeutet, die Diazoniumverbindung eines Amins der allgemeinen Formel (8)

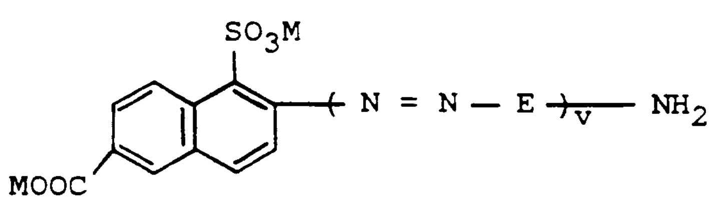

(8)

in welcher M, E und v die in Anspruch 1 genannten Bedeutungen haben, mit einer Verbindung der allgemeinen Formel H-K-N(R°)-Z mit K, R° und Z der in Anspruch 1 genannten Bedeutung kuppelt, oder daß man eine Verbindung der allgemeinen Formel (9)

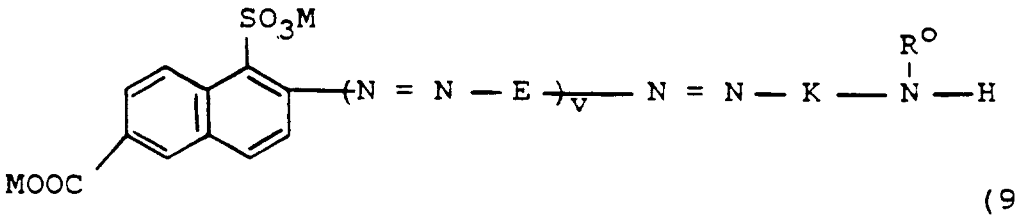

(9)

in welcher M, E, v, R° und K die in Anspruch 1 genannten Bedeutungen haben, mit einer Verbindung der allgemeinen Formel Hal-Z , in welcher Z die in Anspruch 1 genannte Bedeutung besitzt und Hal ein Halogenatom ist, umsetzt, oder daß man eine Verbindung der allgemeinen Formel (10)

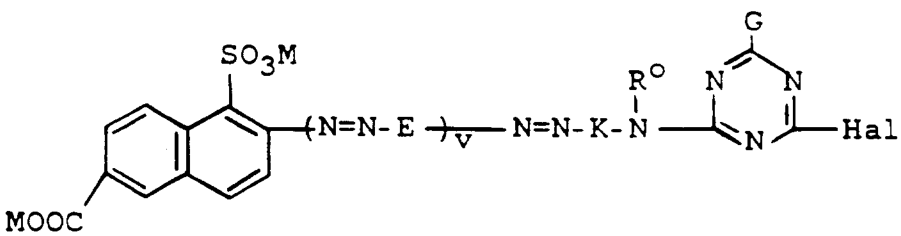

(10)

in welcher Hal, M, E, v, R°, K und G eine der oben genannten Bedeutungen besitzen, mit einer Verbindung der allgemeinen Formel (11a) oder (11b)

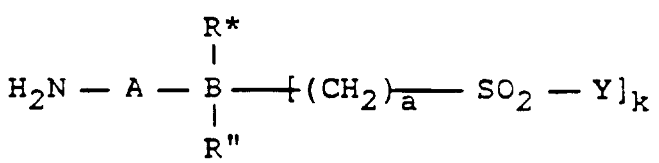

(11a)

$H_2N - alk - SO_2 - Y$ (11b)

mit A, B, R*, R'', a, k, Y and alk der in Anspruch 1 genannten Bedeutung in äquimolaren Mengen umsetzt, und daß man im Falle von K° gleich einem Rest der allgemeinen Formel (2B) eine Verbindung der allgemeinen Formel (12)

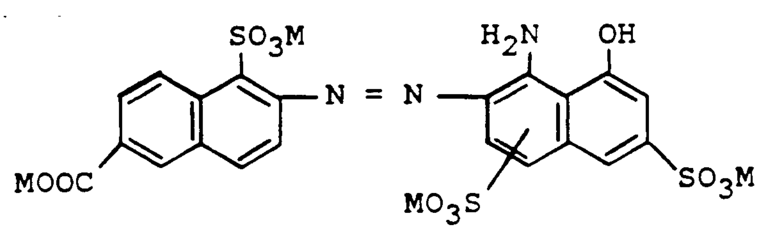

(12)

in welcher M die in Anspruch 1 genannte Bedeutung besitzt, mit der Diazoniumverbindung eines Amins der allgemeinen Formel (13)

$H_2N - D - N(R^o) - Z$ (13)

in welcher D, R° und Z die in Anspruch 1 genannte Bedeutung hat, kuppelt, oder daß man eine Verbindung der allgemeinen Formel (14)

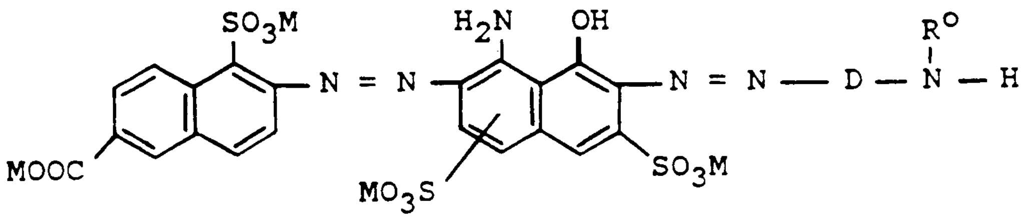

(14)

in welcher D, R° und M die in Anspruch 1 genannten Bedeutungen haben, mit einer Verbindung der allgemeinen Formel Hal-Z mit Hal und Z der obengenannten Bedeutung umsetzt, oder daß man eine Verbindung der allgemeinen Formel (15)

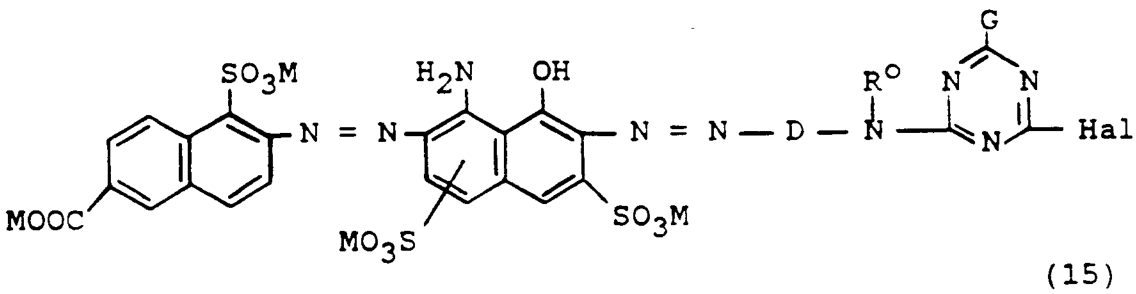

(15)

in welcher G, D, R° und M die oben genannten Bedeutungen haben, mit einer Verbindung der allgemeinen Formel (11a) oder (11b) in äquimolaren Mengen umsetzt.

**21.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

**22.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

**Claims**

**1.** An azo compound conforming to the formula (1)

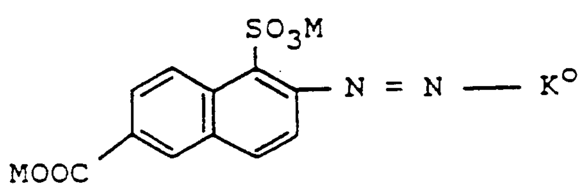

(1)

where:

M is hydrogen or a salt-forming metal atom, preferably an alkali metal atom,
K° is a radical of the formula (2A) or (2B)

$$-(E-N=N)_v-K-Z \qquad (2A)$$

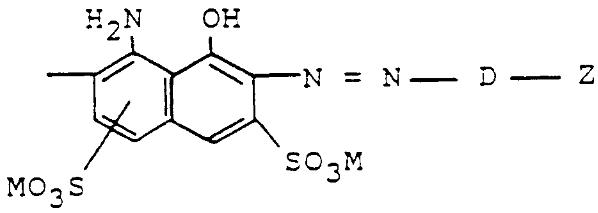

(2B)

where

- M is as defined above,
- K is the bivalent radical, free from a hereinbelow-defined group of the formula $-N(R^o)-$, of a water-soluble amino-containing coupling component,
- Z is a radical of the formula (3)

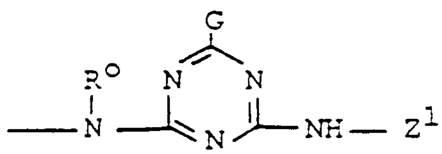

(3)

where

- $R^o$ is hydrogen or alkyl of 1 to 4 carbon atoms or is alkyl of 1 to 4 carbon atoms which is substituted by sulfo, carboxyl, sulfato, phosphato, hydroxyl, methoxy, ethoxy, phenyl, monosulfophenyl or disulfophenyl,
- G is halogen, methoxy, hydroxyl or a substituted or unsubstituted anilino radical in which one of the substituents may also be a fiber-reactive group, and
- $Z^1$ is a radical of the formula (3a) or (3b)

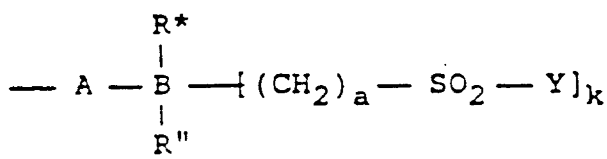

(3a)

$$-alk-SO_2-Y \qquad (3b)$$

where

- A is a direct bond, alkylene of 2 to 6 carbon atoms, or phenylene which may be substituted by 1 or 2 substituents selected from the group consisting of methyl, ethyl, methoxy, ethoxy, chlorine, sulfo and carboxyl,
- B is a benzene or naphthalene radical,
- R* is hydrogen, alkyl of 1 to 4 carbon atoms, alkoxy of 1 to 4 carbon atoms, fluorine, bromine, chlorine, sulfo, carboxyl, carbalkoxy of 2 to 5 carbon atoms, trifluoromethyl, carbamoyl or N-($C_1$-$C_4$-alkyl)carbamoyl if B is a benzene ring, or hydrogen or sulfo if B is a naphthalene ring,
- R" is hydrogen, alkyl of 1 to 4 carbon atoms, alkoxy of 1 to 4 carbon atoms, chlorine, nitro or sulfo if B is a benzene ring, or hydrogen or sulfo if B is a naphthalene radical,
- Y is vinyl or an ethyl group which contains in the $\beta$-position a substituent which is eliminable under alkaline conditions to leave a vinyl group,
- alk is alkylene of 2 to 6 carbon atoms, preferably 1,3-propylene,
- a is zero, 1 or 2, and
- k is 1 or 2,
- D is a radical of the formula (4)

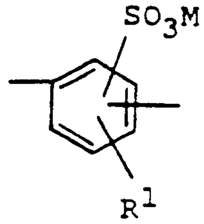

(4)

where

M is as defined above, and

$R^1$ is hydrogen or alkyl of 1 to 4 carbon atoms,

E is a radical of the formula (5a), (5b), (5c) or (5d)

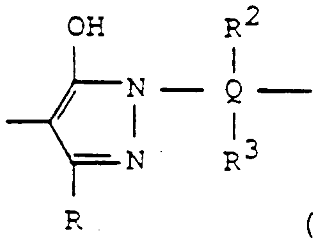

(5a)

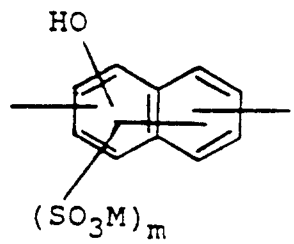

(5b)

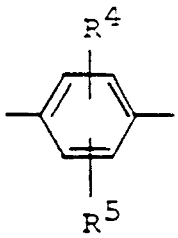

(5c)

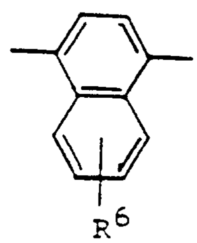

(5d)

where

R is hydrogen, alkyl of 1 to 4 carbon atoms, cyano, carboxyl, carbalkoxy of 2 to 5 carbon atoms, carbamoyl or phenyl,

Q is a benzene or naphthalene radical,

$R^2$ is hydrogen, alkyl of 1 to 4 carbon atoms, alkoxy of 1 to 4 carbon atoms, fluorine, bromine, chlorine, sulfo, carboxyl, carbalkoxy of 2 to 5 carbon atoms, trifluoromethyl, carbamoyl or N-($C_1$-$C_4$-alkyl)-carbamoyl if Q is a benzene ring, or hydrogen or sulfo if Q is a naphthalene ring,

$R^3$ is hydrogen, alkyl of 1 to 4 carbon atoms, alkoxy of 1 to 4 carbon atoms, chlorine or sulfo if Q is a benzene radical, or hydrogen or sulfo if Q is a naphthalene radical,

$R^4$ is hydrogen, alkyl of 1 to 4 carbon atoms, alkoxy of 1 to 4 carbon atoms, bromine, chlorine, trifluoromethyl, sulfo, carboxyl or cyano,

$R^5$ is hydrogen, alkyl of 1 to 4 carbon atoms, alkoxy of 1 to 4 carbon atoms, chlorine, amino, alkylamino of 1 to 4 carbon atoms, alkanoylamino of 2 to 5 carbon atoms, benzoylamino, ureido, N'-phenylureido, N'-($C_1$-$C_4$-alkyl)-ureido, phenylsulfonyl or alkylsulfonyl of 1 to 4 carbon atoms,

$R^6$ is hydrogen or sulfo,

M is as defined above,

m is 1 or 2,

v is zero or 1, and

-K-N($R^o$)- is the bivalent radical of a water-soluble amino-containing coupling component.

**2.** An azo compound as claimed in claim 1, wherein -K-N($R^o$)-is a radical of the formula (6a), (6b) (6c), (6d), (6e), (6f), (6g), (6h) or (6i)

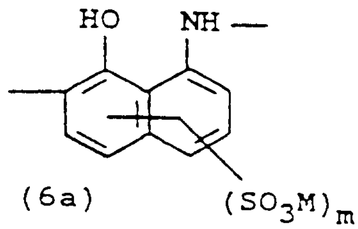
(6a)

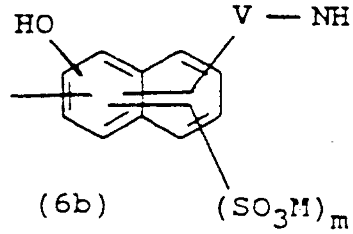
(6b)

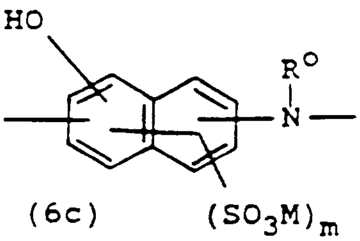
(6c)

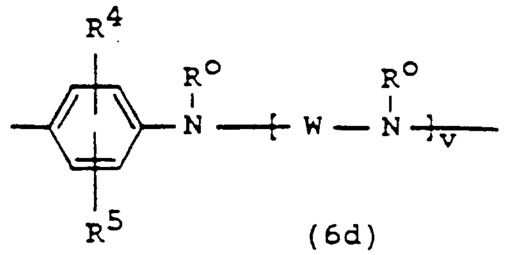
(6d)

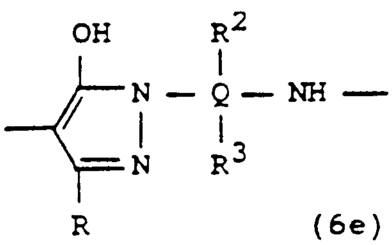
(6e)

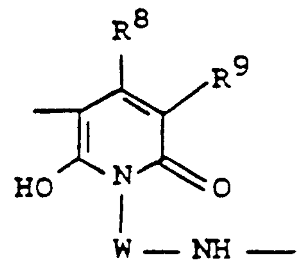
(6f)

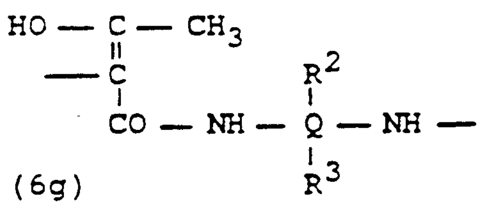
(6g)

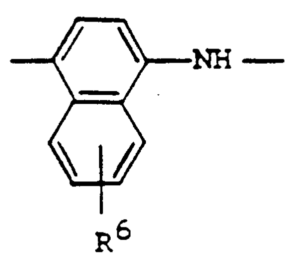
(6h)

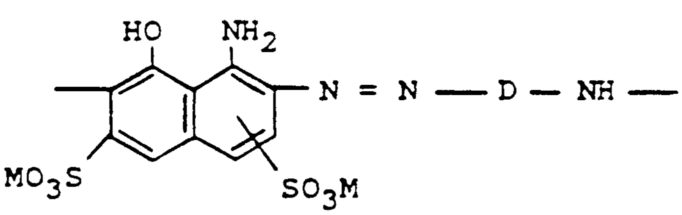
(6i)

where

M, m, v, Q, D, R, $R^o$, $R^1$, $R^2$, $R^3$, $R^4$, $R^5$ and $R^6$ are each as defined in claim 1,

V is a direct, covalent bond or a radical of the formula -NH-CO-phenylene-, -NH-CO-NH-phenylene-, $-N(CH_3)-CO-$phenylene-, $-N(CH_3)-CO-NH-$phenylene- or -NH-phenylene-,

W is a phenylene radical which may be substituted

by 1 or 2 substituents selected from the group consisting of alkyl of 1 to 4 carbon atoms, alkoxy of 1 to 4 carbon atoms, chlorine, carboxyl and sulfo, or alkylene of 1 to 6 carbon atoms, preferably of 1 to 4 carbon atoms, or alkylene-phenylene having an alkylene moiety of 2 to 4 carbon atoms,

$R^8$ is hydrogen, alkyl of 1 to 4 carbon atoms, alkoxy of 1 to 4 carbon atoms, phenyl or cyano-substituted alkyl of 1 to 4 carbon atoms, and

$R^9$ is hydrogen, sulfo, sulfoalkyl of 1 to 4 carbon atoms, cyano or carbamoyl.

**3.** An azo compound as claimed in claim 1 or 2, wherein R is methyl, carboxyl, carbomethoxy or carboethoxy.

**4.** An azo compound as claimed in at least one of claims 1 to 3, wherein R* is hydrogen, methoxy or methyl if B is a benzene ring, or hydrogen or sulfo if B is a naphthalene ring.

**5.** An azo compound as claimed in at least one of claims 1 to 4, wherein R'' is hydrogen, methoxy, ethoxy or methyl if Q is a benzene ring, or hydrogen or sulfo if Q is a naphthalene radical.

**6.** An azo compound as claimed in at least one of claims 1 to 5, wherein $R^2$ is hydrogen, methoxy or methyl if B is a benzene ring, or hydrogen or sulfo if B is a napthalene ring.

**7.** An azo compound as claimed in at least one of claims 1 to 6, wherein $R^3$ is hydrogen, methoxy, ethoxy or methyl if Q is a benzene ring, or hydrogen or sulfo if Q is a napthalene radical.

**8.** An azo compound as claimed in claim 1, wherein $R^4$ is hydrogen, methyl or sulfo and $R^5$ is ureido, acetylamino or propionylamino.

**9.** An azo compound as claimed in claim 1 or 4, wherein K° is a radical of the formula (2B)

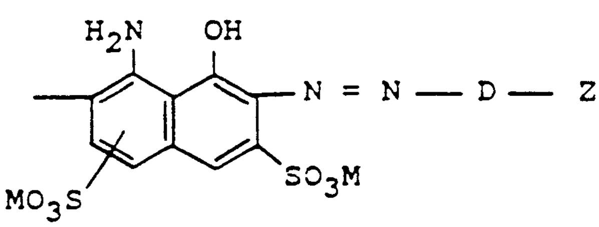

(2B)

where M, D and Z are each as defined in claim 1 and R° is hydrogen.

**10.** An azo compound as claimed in claim 1, wherein K° is a radical of the formula

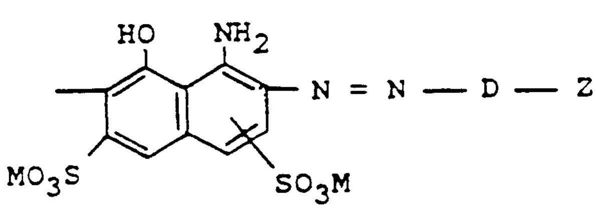

where M, D and Z are each as defined in claim 1 and R° is hydrogen.

**11.** An azo compound as claimed in at least one of claims 1 to 10, wherein A is a direct bond.

**12.** An azo compound as claimed in at least one of claims 1 to 11, wherein a is zero.

**13.** An azo compound as claimed in at least one of claims 1 to 13, wherein G is chlorine or fluorine.

**14.** An azo compound as claimed in claim 1 of the formula

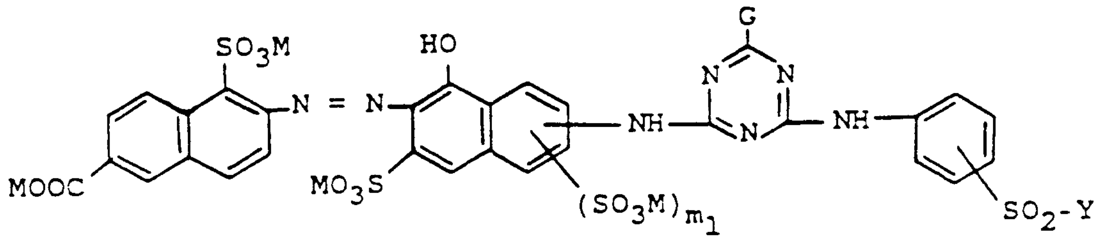

where Y and M are each as defined in claim 1, G is fluorine or chlorine and $m_1$ is zero or 1.

**15.** An azo compound as claimed in claim 1 of the formula

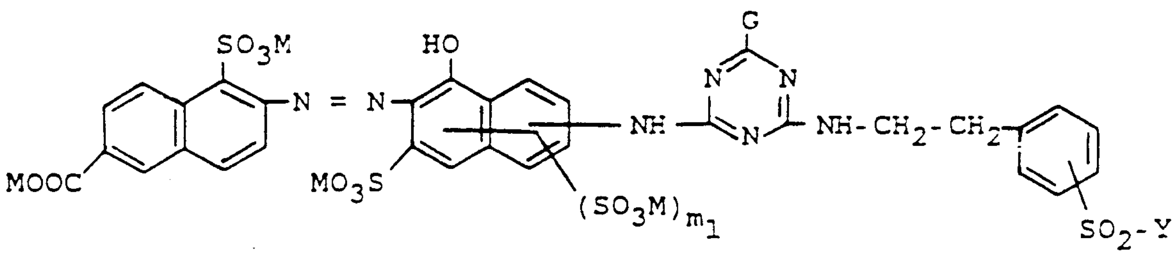

where Y and M are each as defined in claim 1, G is fluorine or chlorine and $m_1$ is zero or 1.

**16.** An azo compound as claimed in claim 1 of the formula

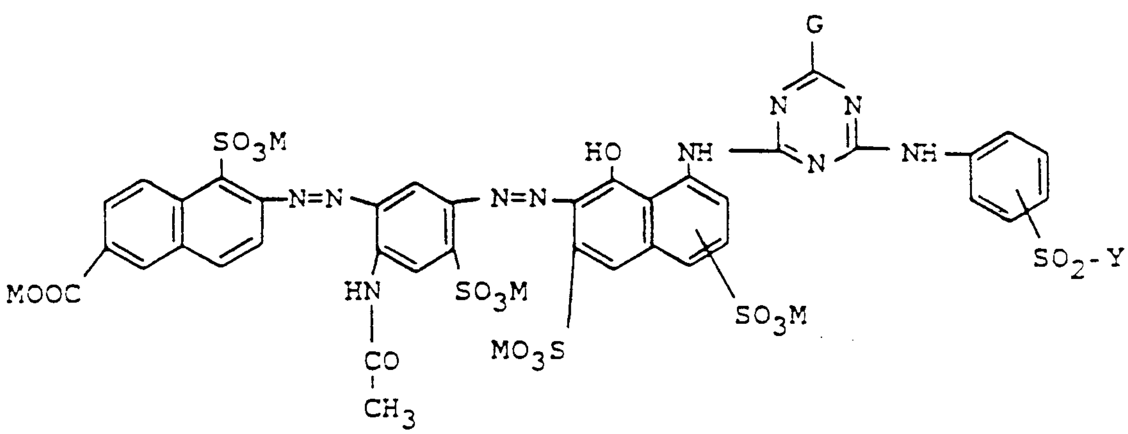

where M and Y are each as defined above and G is fluorine or chlorine.

**17.** An azo compound as claimed in claim 1 of the formula

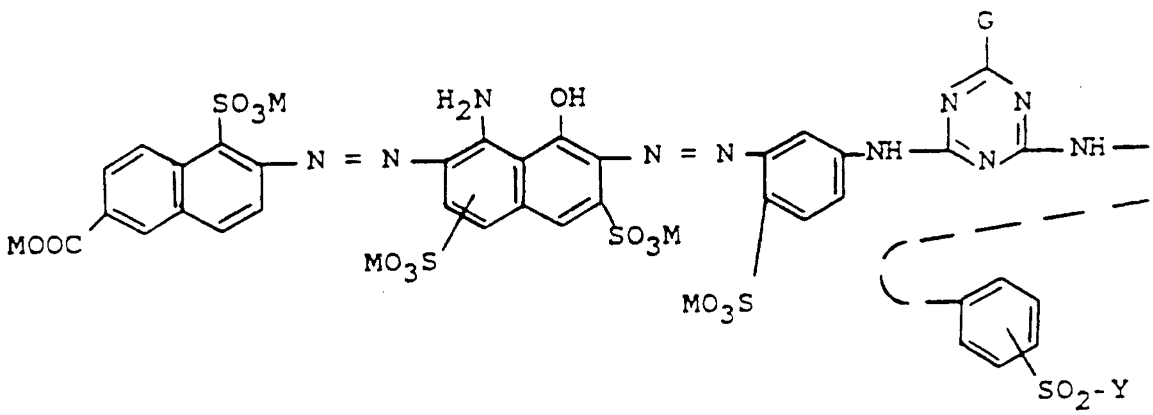

where M and Y are each as defined in claim 1 and G is fluorine or chlorine.

**18.** An azo compound as claimed in claim 1 of the formula

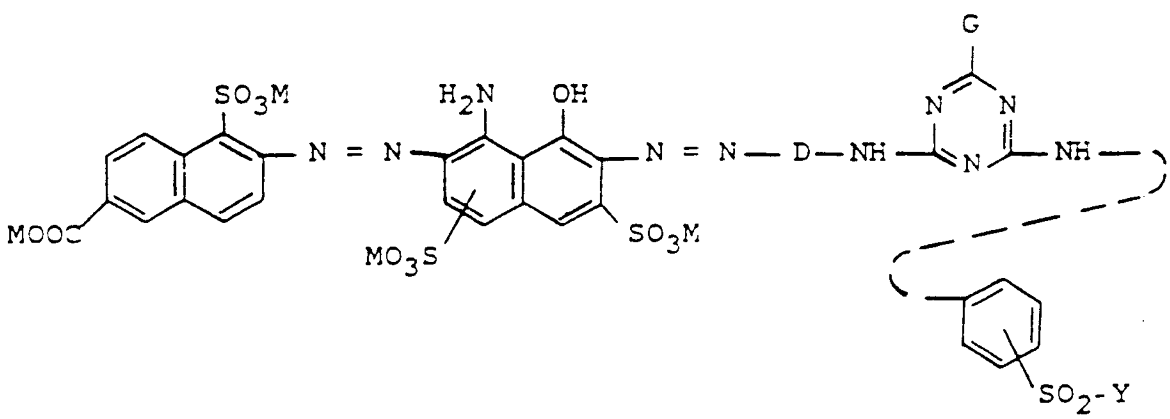

where D, M and Y are each as defined in claim 1 and G is fluorine or chlorine.

**19.** An azo compound as claimed in at least one of claims 1 to 18, wherein Y is vinyl or $\beta$-sulfatoethyl.

**20.** A process for preparing an azo compound of claim 1, which comprises if $K^o$ is a radical of the formula (2A) coupling the diazonium compound of an amine of the formula (8)

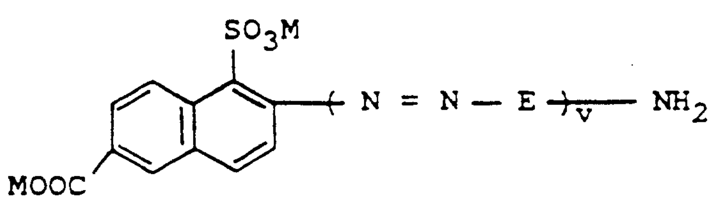

(8)

where M, E and v are each as defined in claim 1, with a compound of the formula H-K-N($R^o$)-Z, where K, $R^o$ and Z are each as defined in claim 1, or reacting a compound of the formula (9)

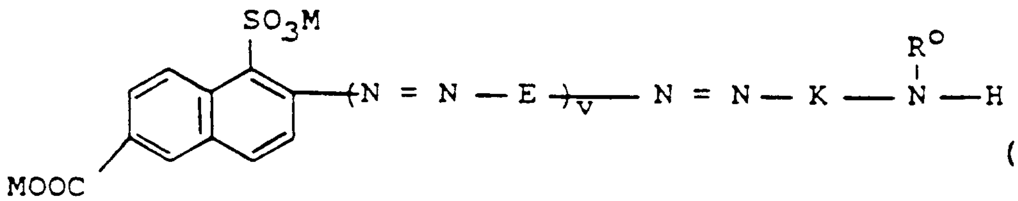

(9)

where M, E, v, $R^o$ and K are each as defined in claim 1, with a compound of the formula Hal-Z, where Z is as defined in claim 1 and Hal is a halogen atom, or reacting a compound of the formula (10)

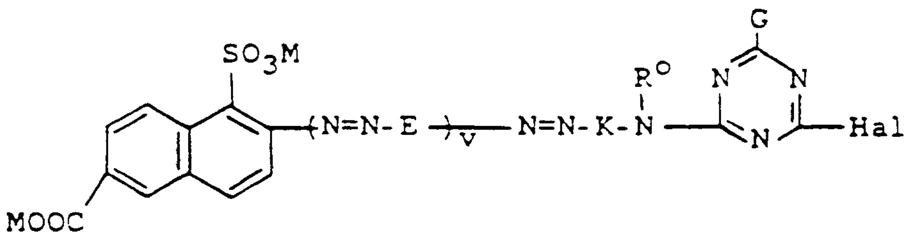

(10)

where Hal, M, E, v, $R^0$, K and G are each as defined above, with a compound of the formula (11a) or (11b)

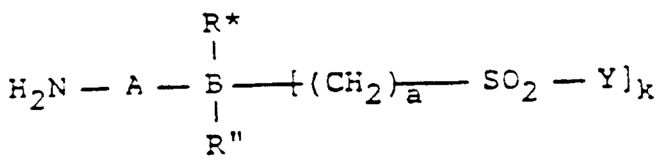

(11a)

$H_2N — alk — SO_2 — Y$ (11b)

where A, B, R*, R", a, k, Y and alk are each as defined in claim 1, in equimolar amounts, or if $K^o$ is a radical of the formula (2B) coupling a compound of the formula (12)

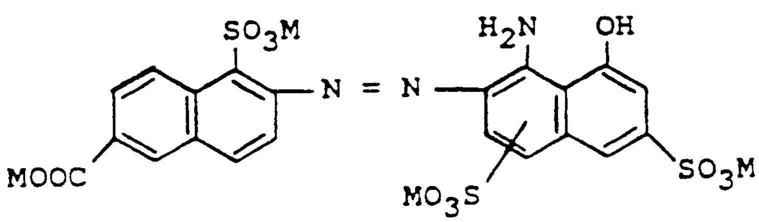

(12)

where M is as defined in claim 1, with the diazonium compound of an amine of the formula (13)

$H_2N\text{-}D\text{-}N(R^0)\text{-}Z$ (13)

where D, $R^0$ and Z are each as defined in claim 1, or reacting a compound of the formula (14)

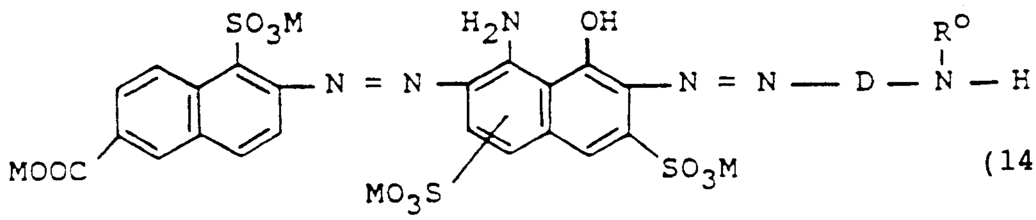

(14)

where D, $R^0$ and M are each as defined in claim 1, with a compound of the formula Hal-Z, where Hal and Z are each as defined above, or reacting a compound of the formula (15)

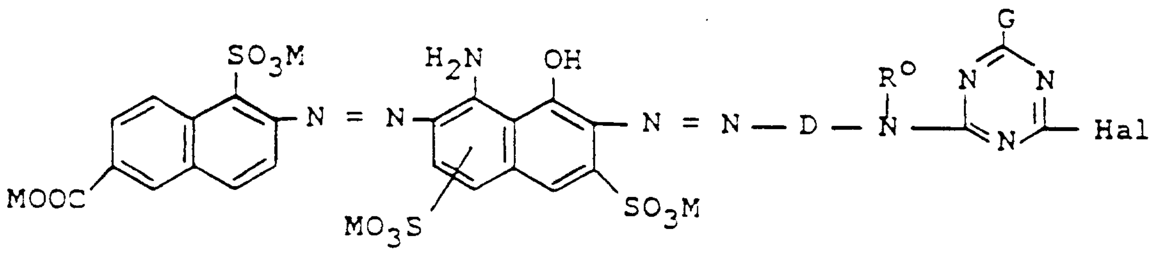

(15)

where G, D, $R^0$ and M are each as defined above, with a compound of formula (11a) or (11b) in equimolar amounts.

**21.** The use of a compound conforming to the formula (1) of claim 1 for dyeing (including printing) of hydroxyl- and/or carboxamido-containing material, in particular fiber material.

**22.** A process for dyeing (including printing) hydroxyl- and/or carboxamido-containing material, in particular fiber material, wherein a dye is introduced onto or into the material and fixed by means of heat and/or with the aid of an alkaline agent, which comprises using as the dye a compound conforming to the formula (1) of claim 1.

## Revendications

**1.** Composé azoïque correspondant à la formule générale (1)

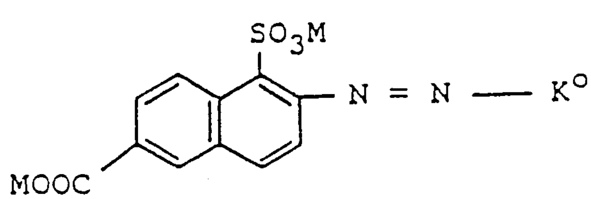

(1)

dans laquelle :
M représente un atome d'hydrogène ou un atome de métal formant un sel, de préférence un atome de métal alcalin ;
$K^0$ représente un radical de formule générale (2A) ou (2B)

$$-(E-N=N)_v-K-Z \qquad (2A)$$

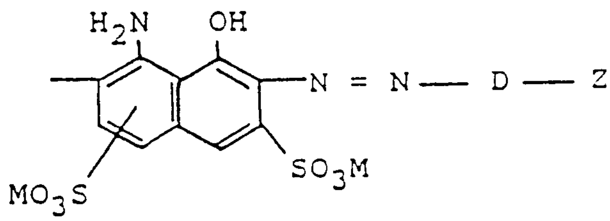

(2B)

dans lesquelles
M est tel que défini ci-dessus,
K représente le radical bivalent, libre d'un groupe défini ci-dessous de formule $-N(R^0)-$, d'un composant de copulation contenant des groupes amino, et soluble dans l'eau,
Z représente un radical de formule générale (3)

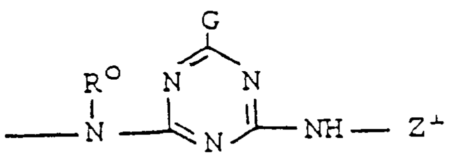

(3)

dans laquelle

$R^0$ représente l'hydrogène ou un radical alkyle en $C_1$-$C_4$, ou un radical alkyle en $C_1$-$C_4$, qui est substitué par des groupes sulfo, carboxy, sulfato, phosphato, hydroxy, méthoxy, éthoxy, phényle, monosulfophényle ou disulfophényle,

G représente un atome d'halogène, ou un groupe méthoxy ou un groupe hydroxy ou un radical anilino éventuellement substitué, l'un des substituant pouvant également représenter un groupe réactif vis-à-vis des fibres, et

$Z^1$ représente un radical de formule générale (3a) ou (3b)

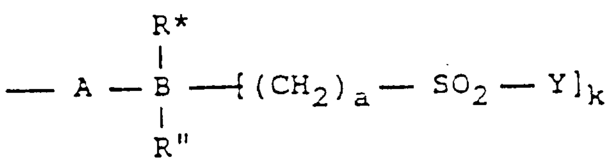

(3a)

$-alk-SO_2-Y$ (3b)

dans lesquelles

A représente une liaison directe ou un groupe alkylène en $C_2$-$C_6$ ou un groupe phénylène qui peut être substitué par un ou deux substituants choisis dans le groupe des méthyle, éthyle, méthoxy, éthoxy, chloro, sulfo et carboxy,

B représente un radical benzène ou naphthalène,

R* représente un atome d'hydrogène, ou un groupe alkyle en $C_1$-$C_4$, alkoxy en $C_1$-$C_4$, ou un atome de fluor, de brome ou de chlore, ou un groupe sulfo, carboxy, carbalkoxy en $C_2$-$C_5$, trifluorométhyle, carbamoyle ou N-(alkyle en $C_1$-$C_4$)-carbamoyle, dans le cas où B représente un noyau benzène, ou

R* représente un atome d'hydrogène ou un groupe sulfo dans le cas où B représente un noyau naphthalène,

R'' représente un atome d'hydrogène ou un groupe alkyle en $C_1$-$C_4$, alkoxy en $C_1$-$C_4$, chloro, nitro ou sulfo, dans le cas où B représente un noyau benzène, ou

R'' représente un atome d'hydrogène ou un groupe sulfo, dans le cas où B représente un radical naphthalène,

Y représente un groupe vinyle ou un groupe éthyle, qui contient en position $\beta$ un substituant

éliminable par un alcali, avec formation d'un groupe vinyle,

alk représente un groupe alkylène en $C_2$-$C_6$, et de préférence le groupe 1,3-propylène,

a vaut 0, 1 ou 2, et

k vaut 1 ou 2,

D représente un radical de formule générale (4)

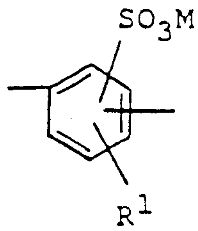

(4)

dans laquelle

M est tel que défini ci-dessus,

$R^1$ représente un atome d'hydrogène ou un groupe alkyle en $C_1$-$C_4$,

E représente un radical de formule générale (5a), (5b), (5c) ou (5d)

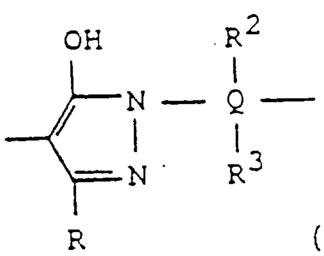

(5a)

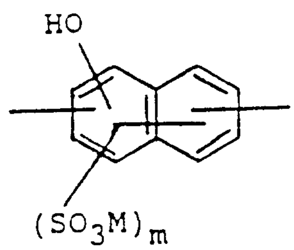

(5b)

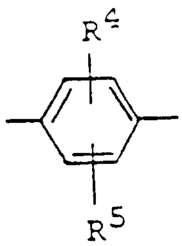

(5c)

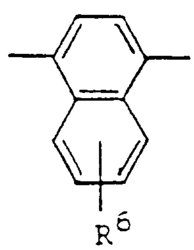

(5d)

dans laquelle

R représente un atome d'hydrogène, un groupe alkyle en $C_1$-$C_4$, cyano, carboxy, carbalkoxy en $C_2$-$C_5$, carbamoyle ou phényle,

Q représente un radical benzène ou naphthalène, $R^2$ représente un atome d'hydrogène, un groupe alkyle en $C_1$-$C_4$, alkoxy en $C_1$-$C_4$, ou un atome de fluor, de brome ou de chlore, ou un groupe sulfo, carboxy, carbalkoxy en $C_2$-$C_5$, trifluorométhyle, carbamoyle ou N-(alkyle en $C_1$-$C_4$)-carbamoyle, dans le cas ou Q représente un noyau benzène, ou

$R^2$ représente un atome d'hydrogène ou un groupe sulfo, dans le cas où Q représente un noyau naphthalène,

$R^3$ représente un atome d'hydrogène, un groupe alkyle en $C_1$-$C_4$, alkoxy en $C_1$-$C_4$, chloro ou sulfo, dans le cas où Q représente un radical benzène, ou l'hydrogène ou un groupe sulfo, dans le cas où Q représente un radical naphthalène,

$R^4$ représente un atome d'hydrogène, un groupe alkyle en $C_1$-$C_4$, alkoxy en $C_1$-$C_4$, un atome de brome ou de chlore, ou un groupe trifluorométhyle, sulfo, carboxy ou cyano,

$R^5$ représente un atome d'hydrogène, un groupe alkyle en $C_1$-$C_4$, alkoxy en $C_1$-$C_4$, chloro, amino, alkylamino en $C_1$-$C_4$, alkanoylamino en $C_2$-$C_5$, benzoylamino, uréido, N'-phényluréido, N'-(alkyle en $C_1$-$C_4$)-uréido, phénylsulfonyle ou alkylsulfonyle en $C_1$-$C_4$,

$R^6$ représente un atome d'hydrogène ou un groupe sulfo,
M est tel que défini ci-dessus,
m vaut 1 ou 2,
v vaut 0 ou 1 et
-K-N($R^0$)- représente le radical bivalent d'un composant de copulation hydrosoluble et contenant des groupes amino,

**2.** Composé azoïque selon la revendication 1, **caractérisé** en ce que le radical -K-N($R^0$)- est un radical de formule générale (6a), (6b), (6c), (6d), (6e), (6f), (6g), (6h) ou (6i)

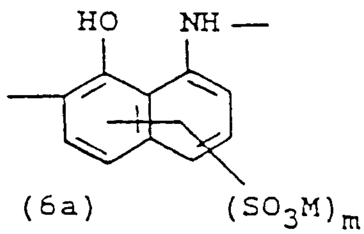
(6a)

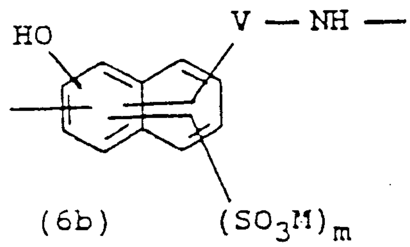
(6b)

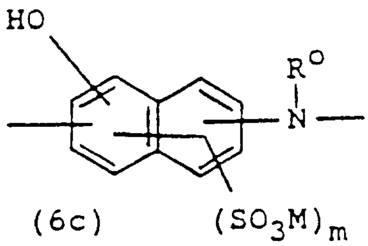

(6c)

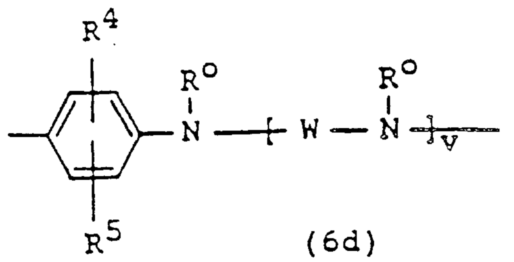

(6d)

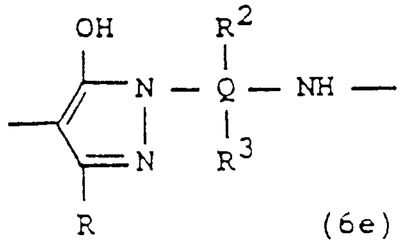

(6e)

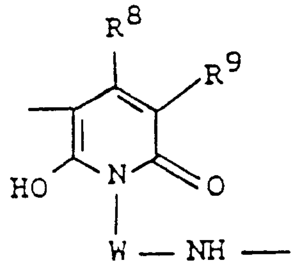

(6f)

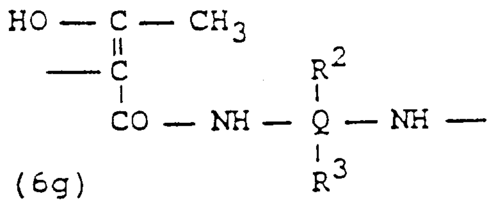

(6g)

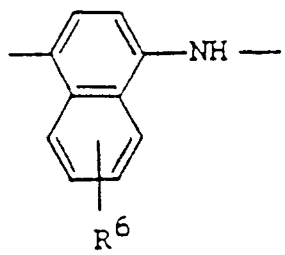

(6h)

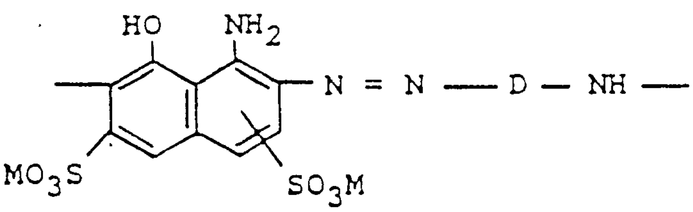

(6i)

dans lesquelles
M, m, v, Q, D, R, $R^0$, $R^1$, $R^2$, $R^3$, $R^4$, $R^5$ et $R^6$ ont l'une des significations indiquées dans la revendication 1,
V représente une liaison covalente directe ou un radical de formule -NH-CO-phénylène-, -NH-CO-NH-phénylène-, $-N(CH_3)$-CO-phénylène-, $-N(CH_3)$-CO-NH-phénylène- ou -NH-phénylène,
W représente un radical phénylène, qui peut être substitué par un ou deux substituants choisis dans le groupe des radicaux alkyle en $C_1$-$C_4$, alkoxy en $C_1$-$C_4$, chloro, carboxy et sulfo, ou un groupe alkylène en $C_1$-$C_6$,de préférence en $C_1$-$C_4$, ou un groupe alkylène-phénylène avec un groupe alkylène en $C_2$-$C_4$,
$R^8$ représente un atome d'hydrogène, ou un groupe alkyle en $C_1$-$C_4$, alkoxy en $C_1$-$C_4$, phényle ou un groupe alkyle en $C_1$-$C_4$, substitué par le groupe cyano, et
$R^9$ représente un atome d'hydrogène, ou un groupe sulfo, sulfoalkyle en $C_1$-$C_4$, cyano ou carbamoyle.

3. Composé azoïque selon la revendication 1 ou 2, **caractérisé** en ce que R représente un groupe méthyle, carboxy, carbométhoxy ou carbéthoxy.

**4.** Composé azoïque selon au moins l'une des revendications 1 à 3, **caractérisé** en ce que $R^*$ représente un atome d'hydrogène, ou un groupe méthoxy ou méthyle, dans le cas où B représente un noyau benzène, ou l'hydrogène ou un groupe sulfo, dans le cas où B représente un noyau naphthalène.

**5.** Composé azoïque selon au moins l'une des revendications 1 à 4, **caractérisé** en ce que $R''$ représente un atome d'hydrogène, ou un groupe méthoxy, éthoxy ou méthyle, dans le cas où Q représente un noyau benzène, ou un atome d'hydrogène ou un groupe sulfo, dans le cas où Q représente un noyau naphthalène.

**6.** Composé azoïque selon au moins l'une des revendications 1 à 5, **caractérisé** en ce que $R^2$ représente un atome d'hydrogène, ou un groupe méthoxy ou méthyle, dans le cas où B représente un noyau benzène, ou un atome d'hydrogène ou un groupe sulfo, dans le cas où B représente un noyau naphthalène.

**7.** Composé azoïque selon au moins l'une des revendications 1 à 6, **caractérisé** en ce que $R^3$ représente un atome d'hydrogène, ou un groupe méthoxy, éthoxy ou méthyle, dans le cas où Q représente un noyau benzène, ou un atome d'hydrogène ou un groupe sulfo, dans le cas où Q représente un noyau naphthalène.

**8.** Composé azoïque selon la revendication 1, **caractérisé** en ce que $R^4$ représente un atome d'hydrogène, ou un groupe méthyle ou sulfo, et $R^5$ représente un groupe uréido, acétylamino ou propionylamino.

**9.** Composé azoïque selon la revendication 1 ou 4, **caractérisé** en ce que $K^0$ représente un radical de formule générale (2B)

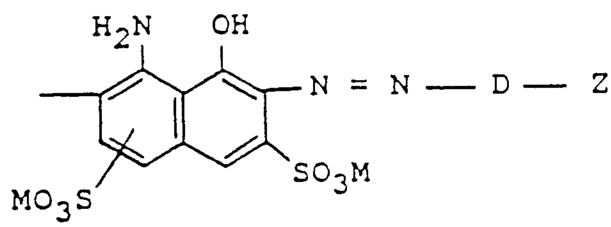

(2B)

dans laquelle M, D et Z sont tels que définis dans la revendication 1 et $R^0$ représente un atome d'hydrogène.

**10.** Composé azoïque selon la revendication 1, **caractérisé** en ce que $K^0$ représente un radical de formule générale

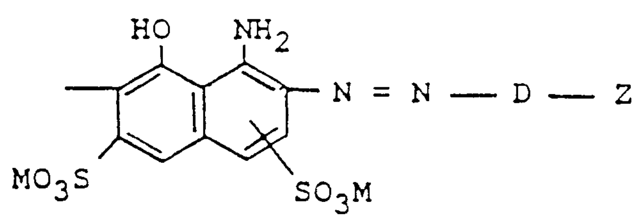

dans laquelle M, D et Z sont tels que définis dans la revendication 1 et $R^0$ représente un atome d'hydrogène.

**11.** Composé azoïque selon au moins l'une des revendications 1 à 10, **caractérisé** en ce que A représente une liaison directe.

**12.** Composé azoïque selon au moins l'une des revendications 1 à 11, **caractérisé** en ce que a vaut 0.

**13.** Composé azoïque selon au moins l'une des revendications 1 à 12, **caractérisé** en ce que G représente un atome de chlore ou de fluor.

**14.** Composé azoïque selon la revendication 1, de formule générale

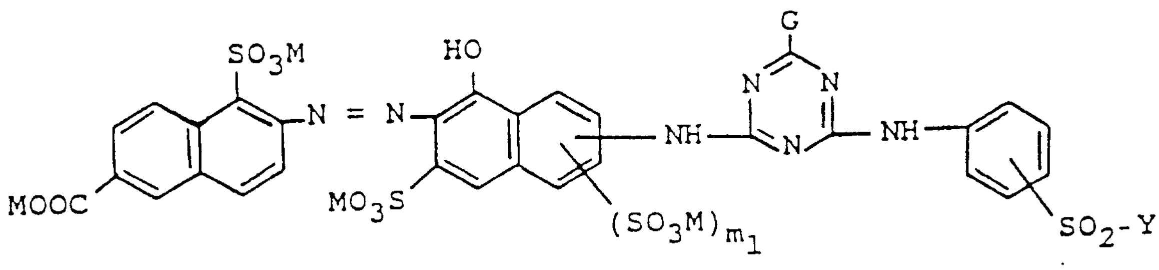

dans laquelle Y et M sont tels que définis dans la revendication 1, G représente le fluor ou le chlore et $m_1$ vaut 0 ou 1.

**15.** Composé azoïque selon la revendication 1, de formule générale

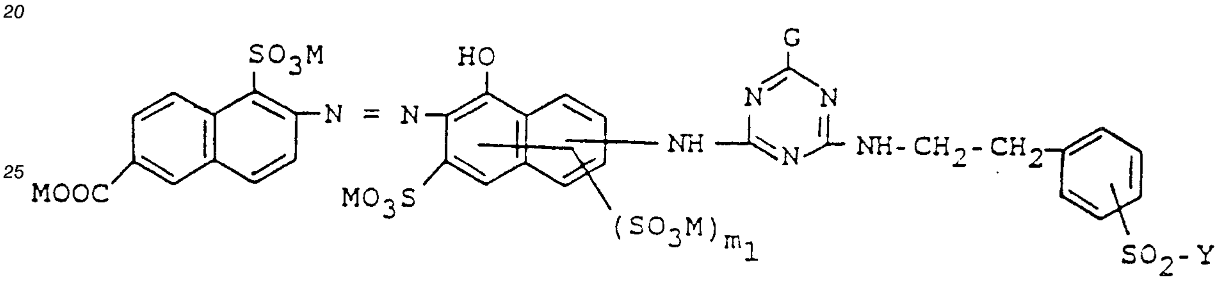

dans laquelle Y et M sont tels que définis dans la revendication 1, G représente le fluor ou le chlore et $m_1$ vaut 0 ou 1.

**16.** Composé azoïque selon la revendication 1, de formule générale

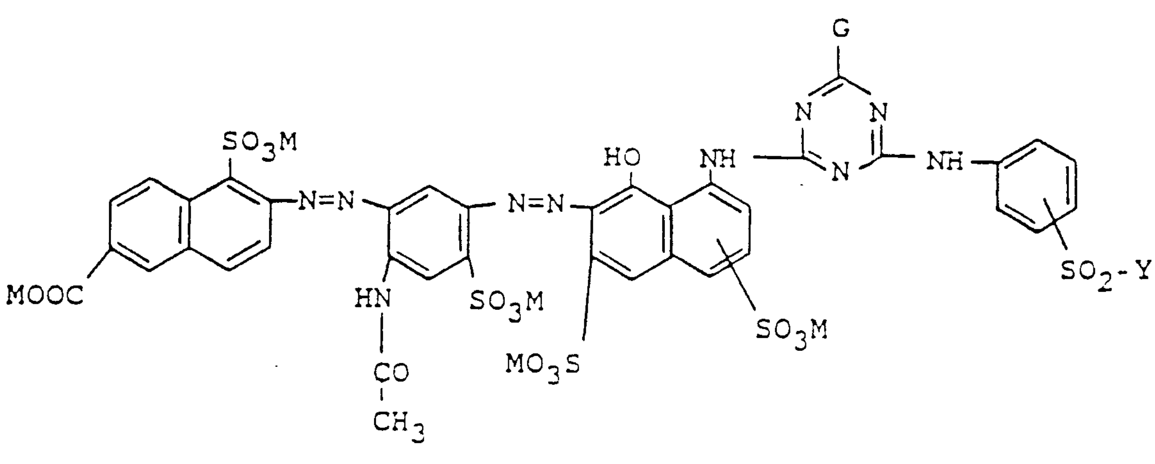

dans laquelle M et Y sont tels que définis ci-dessus et G représente le fluor ou le chlore.

**17.** Composé azoïque selon la revendication 1, de formule générale

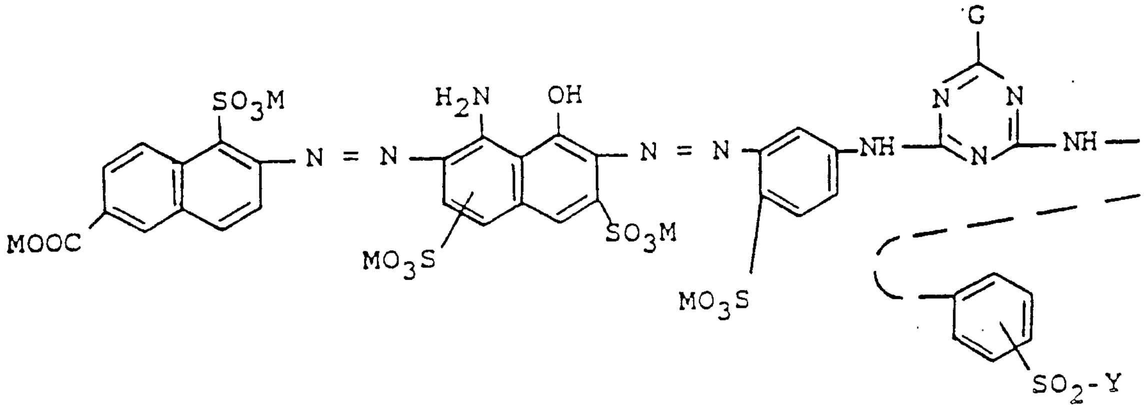

dans laquelle M et Y sont tels que définis dans la revendication 1 et G représente le fluor ou le chlore.

**18.** Composé azoïque selon la revendication 1, de formule générale

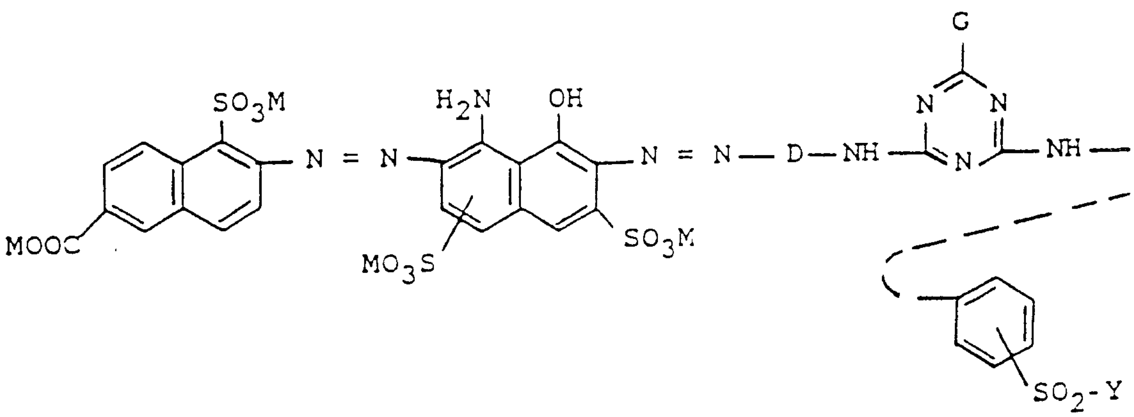

dans laquelle D, M et Y sont tels que définis dans la revendication 1, et G représente le fluor ou le chlore.

**19.** Composé azoïque selon au moins l'une des revendications 1 à 18, **caractérisé** en ce que Y représente le groupe vinyle ou le groupe $\beta$-sulfatoéthyle.

**20.** Procédé de préparation d'un composé azoïque selon la revendication 1, **caractérisé** en ce que, dans le cas où $K^0$ représente un radical de formule générale (2A), on effectue la copulation d'un composé de diazonium d'une amine de formule générale (8)

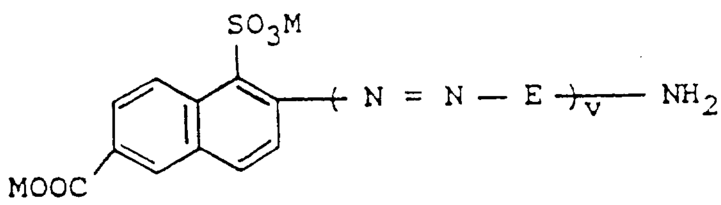

(8)

dans laquelle M, E et v sont tels que définis dans la revendication 1, avec un composé de formule générale H-K-N($R^0$)-Zavec K, $R^0$ et Z tels que définis dans la revendication 1, ou en ce que l'on fait réagir un composé de formule générale (9),

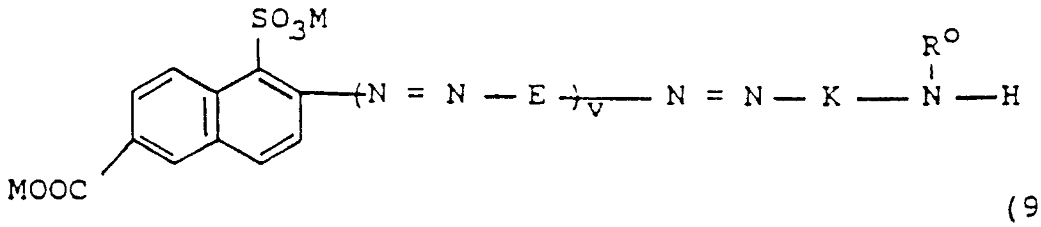

(9)

dans laquelle M, E, v, $R^0$ et K sont tels que définis dans la revendication 1, sur un composé de formule générale Hal-Z, dans laquelle Z est tel que défini dans la revendication 1 et Hal représente un atome d'halogène, ou en ce que l'on fait réagir un composé de formule générale (10),

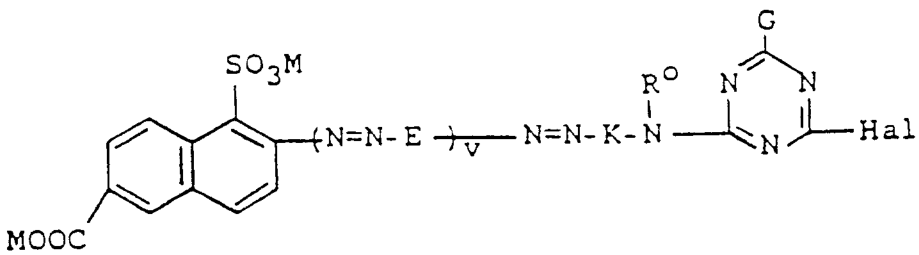

(10)

dans laquelle Hal, M, E, v, $R^0$, K et G ont l'une des significations indiquées ci-dessus, sur un composé de formule générale (11a) ou (11b)

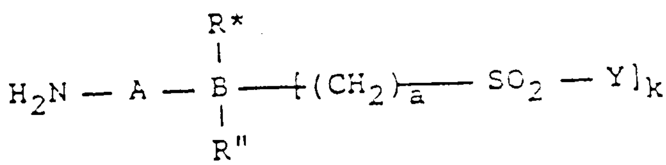

(11a)

$H_2N - alk - SO_2 - Y$ (11b)

avec A, a, R*, R", a, k, Y et alk tels que définis dans la revendication 1, en quantités équimolaires, et en ce que, dans le cas ou $K^0$ représente le radical de formule générale (2B), on effectue la copulation d'un composé de formule générale (12)

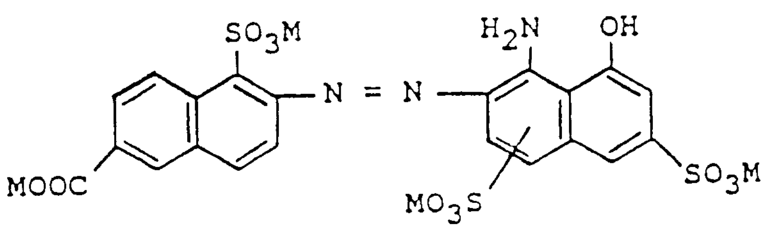

(12)

dans laquelle M est tel que défini dans la revendication 1, sur le composé de diazonium d'une amine de formule générale (13)

$H_2N - D - N(R^0){-}Z$ (13)

dans laquelle D, $R^0$ et Z sont tels que définis dans la revendication 1, ou en ce que l'on fait réagir un composé de formule générale (14)

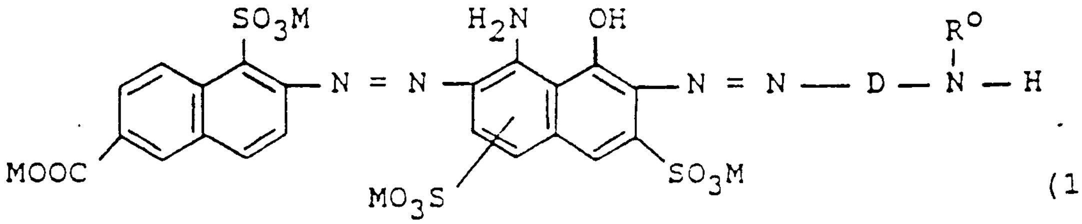

(14)

dans laquelle D, $R^0$ et M sont tels que définis dans la revendication 1, sur un composé de formule générale Hal-Z avec Hal et Z tels que définis ci-dessus, ou en ce que l'on fait réagir un composé de formule générale (15)

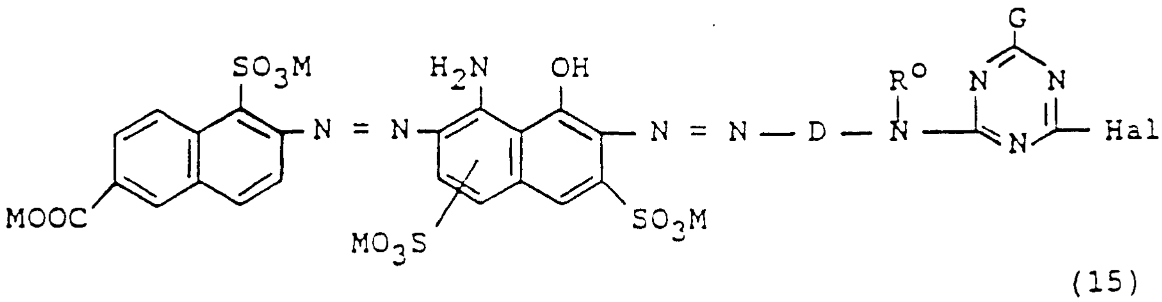

(15)

dans laquelle G, D, $R^0$ et M sont tels que définis ci-dessus, sur un composé de formule générale (11a) ou (11b) en quantités équimolaires.

**21.** Utilisation d'un composé correspondant à la formule générale (1) selon la revendication 1 pour la coloration et la teinture (y compris l'impression) de matières contenant des groupes hydroxy et/ou carbonamide, en particulier des matières fibreuses.

**22.** Procédé pour la coloration et la teinture (y compris l'impression) de matières contenant des groupes hydroxy et/ou carbonamide, en particulier des matières fibreuses, selon lequel on apporte un colorant sur la matière, ou on l'incorpore dans ladite matière, et on l'y fixe au moyen de la chaleur et/ou au moyen d'un agent à action alcaline, **caractérisé** en ce que l'on utilise comme colorant un composé correspondant à la formule générale (1) selon la revendication 1.